# EUROPÄISCHE PATENTSCHRIFT

(11) **EP 3 804 516 B1**
(45) Veröffentlichungstag und Bekanntmachung des Hinweises auf die Patenterteilung: **01.11.2023**
(21) Anmeldenummer: 20199314.4
(22) Anmeldetag: 30.09.2020
(51) Int. Cl.: A01M 7/00

(54) **LANDWIRTSCHAFTLICHE VERTEILMASCHINE, VORZUGSWEISE EINE FELDSPRITZE ODER EIN DÜNGERSTREUER**
AGRICULTURAL DISTRIBUTOR, PREFERABLY A FIELD SPRAYER OR A FERTILIZER SPREADER
MACHINE D'ÉPANDAGE AGRICOLE, DE PRÉFÉRENCE PULVÉRISATEUR OU DISTRIBUTEUR D'ENGRAIS

(30) Priorität: 10.10.2019 DE 102019127301
(43) Veröffentlichungstag der Anmeldung: 14.04.2021
(73) Patentinhaber: HORSCH LEEB Application Systems GmbH, 94405 Landau an der Isar (DE)
(72) Erfinder: Hirthammer, Daniel, 92421 Schwandorf (DE)
(74) Vertreter: v. Bezold & Partner Patentanwälte - PartG mbB

(56) Entgegenhaltungen:
- EP-B1- 2 591 657
- WO-A1-2015/067804

## Beschreibung

Die Erfindung betrifft eine landwirtschaftliche Verteilmaschine, vorzugsweise eine Feldspritze oder einen pneumatischen Düngerstreuer.

Gattungsgemäße landwirtschaftliche Verteilmaschinen umfassen ein Trägerfahrzeug, ein Verteilergestänge zum Ausbringen von Material, wie Düngemittel, Pflanzenschutzmittel oder Saatgut, das zumindest um eine in Fahrtrichtung verlaufende Schwenkachse bewegbar am Trägerfahrzeug mittelbar oder unmittelbar angeordnet ist und eine Steuereinrichtung zur Steuerung und/oder Regelung einer Drehlage des Verteilergestänges um die Schwenkachse.

Um das Material großflächig auf dem zu bearbeitenden Feldboden auszubringen, weisen Verteilergestänge derartiger Feldspritzen oder pneumatischer Düngerstreuer seitliche Ausleger mit großer Arbeitsbreite auf, teilweise von mehr als zwanzig Metern, an denen Ausbringmittel, z. B. Sprühdüsen bei Feldspritzen oder Prallteller bei pneumatischen Düngerstreuer, angeordnet sind. Für Transportfahrten werden solch breite Spritzgestänge gefaltet und eingeklappt.

Für eine effiziente Ausbringung, insbesondere zur möglichst gleichmäßigen Bedeckung des Bodens mit Material, soll der Abstand zwischen dem Verteilergestänge und Feldboden über die gesamte Arbeitsbreite möglichst konstant bleiben. Aus diesem Grund besteht bei zunehmenden Auslegerdimensionen und der damit einhergehenden Arbeitsbreite die Notwendigkeit, das Spritzgestänge in möglichst gleichbleibendem Abstand zum Boden zu führen, da bereits geringe Schrägstellungen des Spritzgestänges zu großen Abstandsdifferenzen der Ausbringmittel entlang des Verteilergestänges, z. B. der Sprühdüsen, zum Boden führen. Ungewollte Schwankungen des Verteilergestänges können ferner eine unerwünschte Abdrift des auszubringenden Materials verstärken.

Hierzu ist bekannt, ein Verteilergestänge um einen zentralen Punkt zumindest um eine Drehachse drehbar an einem Trägerfahrzeug aufzuhängen. Die Drehachse verläuft dabei vorzugsweise parallel zur Längsachse bzw. zur Fahrrichtung des Trägerfahrzeugs. Um eine gleichmäßige Ausbringung des Materials zu gewährleisten, wird der Abstand zwischen Oberkante des Bestandes und den Ausbringmitteln konstant auf einen definierten Abstand geregelt.

Aus dem Stand der Technik sind hierbei mehrere Ansätze bekannt, um das Verteilergestänge möglichst in der gewünschten Solldrehlage zu halten, Abweichungen von der Solldrehlage zu erfassen und bei Abweichungen das Verteilergestänge wieder mittels einer Stelleinrichtung in die Solldrehlage rückzuführen.

Es wird beispielhaft auf die EP 2 591 657 B1 verwiesen. Dort wird vorgeschlagen, eine Stelleinrichtung bereitzustellen, mittels derer die Drehlage des Verteilergestänges verändert werden kann, und die wahlweise in einem ersten Betriebsmodus oder einem zweiten Betriebsmodus betrieben werden kann. Hierbei wird in einem ersten Betriebsmodus eine weitgehend stellkraftfreie mechanische Verbindung herstellt, in dem das Ausbringgestänge weitestgehend von Drehmomenten um die Schwenkachse durch den Aufhängepunkt, resultierend aus Fahrzeugbewegungen um die Fahrzeuglängsachse, entkoppelt ist. Die stellkraftfreie Verbindung kann beispielsweise mittels annähernd in Echtzeit den Relativbewegungen zwischen dem Ausbringgestänge bzw. dessen Mittelteil und dem Trägerfahrzeug folgenden Stellbewegungen der Stelleinrichtung hergestellt und aufrechterhalten werden. In einem zweiten Betriebsmodus kann dann eine definierte Stellkraft und/oder ein definiertes Stellmoment in das Verteilergestänge zu dessen Verstellung eingeleitet werden.

Es wird ferner beispielhaft auf die EP 3 007 553 B1 verwiesen. Zur genauen Bestimmung der Drehlage des Verteilergestänges um die Schwenkachse wird vorgeschlagen, durch zeitliche Integration einer mit einem Drehratensensor erfassten Drehgeschwindigkeit eine Drehlage des Verteilergestänges zu berechnen, und die berechnete Drehlage mit einer direkt gemessenen Drehlage eines Drehwinkelsensors zur Bestimmung einer momentanen Drehlage des Gestänges zu fusionieren. Anhand der so bestimmten Drehlage erfolgt dann die Regelung oder Steuerung der Drehlage des Verteilergestänges. Einen weiteren Stand der Technik stellt die WO 2015/067804 A1 dar.

Es ist eine Aufgabe der Erfindung, einen verbesserten Ansatz zur Steuerung und/oder Regelung einer Drehlage eines Verteilergestänges einer landwirtschaftlichen Verteilmaschine bereitzustellen, mit dem Nachteile herkömmlicher Techniken vermieden werden können. Die Aufgabe der Erfindung ist es insbesondere, eine besonders präzise und gleichzeitig kosteneffiziente Technik zur Steuerung und/oder Regelung einer Drehlage eines Verteilergestänges einer landwirtschaftlichen Verteilmaschine bereitzustellen.

Diese Aufgaben werden durch eine landwirtschaftliche Verteilmaschine mit den Merkmalen des unabhängigen Anspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß einem allgemeinen Gesichtspunkt betrifft die vorliegende Offenbarung eine landwirtschaftliche Verteilmaschine, nachfolgend auch kurz als Verteilmaschine bezeichnet. Diese umfasst ein Trägerfahrzeug und ein Verteilergestänge zum Ausbringen von Material, wie Düngemittel, Pflanzenschutzmittel oder Saatgut. Das Verteilergestänge ist zumindest um eine in Fahrtrichtung des Trägerfahrzeugs verlaufende Schwenkachse bewegbar am Trägerfahrzeug mittelbar oder unmittelbar angeordnet. Die Schwenkachse kann eine Schwenkachse sein, die sich in Längsrichtung des Trägerfahrzeugs erstreckt. Das Verteilergestänge weist eine hohe Arbeitsbreite auf, d. h. eine Arbeitsbreite, die wesentlich größer als eine Breite des Trägerfahrzeugs, z. B. ein Vielfaches der Breite des Trägerfahrzeugs, ist. Die Arbeitsbreite des Verteilergestänges, d. h. die Breite in Arbeitsposition oder im vollständig ausgeklappten Zustand, kann mindestens 18 Meter sein. Die Verteilmaschine umfasst ferner eine Stelleinrichtung, mittels der eine Stellkraft erzeugbar ist, um das Verteilergestänge um die Schwenkachse zu bewegen;
Die Verteilmaschine umfasst ferner eine Sensoreinrichtung zur Bestimmung einer Drehrate des Verteilergestänges. Die Sensoreinrichtung wird nachfolgend auch als erste Sensoreinrichtung bezeichnet, zur besseren Unterscheidbarkeit von einer nachfolgend noch beschriebenen zweiten Sensoreinrichtung zur Erfassung einer Drehlage des Verteilergestänges.

Die Verteilmaschine umfasst ferner eine Steuereinrichtung zur Steuerung und/oder Regelung einer Drehlage des Verteilergestänges um die Schwenkachse. Die Steuereinrichtung ist ausgebildet, zur Steuerung und/oder Regelung der Drehlage des Verteilergestänges um die Schwenkachse die Stelleinrichtung anzusteuern, vorzugsweise mittels entsprechender von der Steuereinrichtung erzeugter Stellsignale.

Die Steuereinrichtung ist ausgebildet, einen ersten Betriebsmodus durchzuführen, um das Verteilergestänge in einer aktuell eingestellten Solldrehlage zu halten, in dem auf das Verteilergestänge wirkende Störmomente, die beispielsweise aus Wankbewegungen des Trägerfahrzeugs um die Längsachse resultieren, zur Haltung (Einhaltung) der Solldrehlage ausgeregelt werden. Neben Störmomenten, die durch Wankbewegungen des Trägerfahrzeugs erzeugt werden, können ferner weitere auf das Verteilergestänge wirkende Störmomente im ersten Betriebsmodus kompensiert oder ausgeregelt werden, beispielweise durch Wind erzeugte Störmomente. Der erste Betriebsmodus dient somit dazu, eine bereits eingestellte Solldrehlage beizubehalten, indem störmomentbedingte Abweichungen aus der Solldrehlage möglichst schnell ausregelegt werden.

Erfindungsgemäß ist die Steuereinrichtung ausgebildet, im ersten Betriebsmodus durch Bestimmung entsprechender Stellsignale zur Ansteuerung der Stelleinrichtung die von der ersten Sensoreinrichtung erfasste Drehrate als Regelgröße auf einen Sollwert zu regeln, der betragsmäßig zwischen Null und einem Schwellenwert liegt. Hat der Schwellenwert z. B. den Wert ω₀, wird die Drehrate somit auf Sollwerte oder einen Sollbereich zwischen -ω₀ und +ω₀ geregelt, d.h. auf Werte, deren Betrag (Absolutwert) zwischen Null und dem Schwellenwert liegt. Die Drehrate als zeitliche Änderungen der Drehlage wird somit erfindungsgemäß anstelle der Drehlage verwendet, um Abweichungen der aktuellen Drehlage des Verteilergestänges von der gewünschten Solldrehlage zu erkennen und/oder vorherzusagen.

Das direkte Heranziehen der Drehrate als Regelgröße zur Regelung einer Drehlage eines Verteilergestänges auf eine Solldrehlage ermöglicht im Vergleich zu aus dem Stand der Technik bekannten Ansätzen einen genauen und gleichzeitig kosteneffizienten Ansatz zur Regelung der Drehlage des Verteilergestänges auf eine Solldrehlage.

Denn Ansätze, die als Regelgröße die ermittelte Drehlage heranziehen, sind zum Teil ungenauer, da eine mit einem herkömmlichen Neigungssensor ermittelte Drehlage durch externe Beschleunigungen, die zusätzlich zur Erdbeschleunigung auf die Neigungssensoreinrichtung wirken, wie Querbeschleunigungen, verfälscht wird. Wird die Drehlage dagegen durch zeitliche Integration aus einer gemessenen Drehrate berechnet, unterliegt eine solche berechnete Drehlage bekanntermaßen dem Problem der sog. Winkeldrift, da zeitliche Messfehler mitintegriert werden, so dass dieser Ansatz in der Regel ebenfalls ungenauer ist. Zwar können derartige Ungenauigkeiten vermieden werden, wenn die Drehlage sowohl direkt mit einem Neigungssensor gemessen als auch über eine zeitliche Integration berechnet wird und die beiden Messgrößen zur Reduzierung der Nachteile der beiden Messmethoden über eine Sensordatenfusion verknüpft werden. Im Vergleich hierzu können jedoch gemäß dem erfindungsgemäßen Ansatz eine derartige zeitliche Integration und Datenfusion vermieden werden.

Gemäß einer bevorzugten Ausführungsform ist die Steuereinrichtung ausgebildet, zur Durchführung des ersten Betriebsmodus ausschließlich die von der ersten Sensoreinrichtung erfasste Drehrate als Regelgröße zu verwenden. Anders ausgedrückt wird nur die gemessene Drehrate des Verteilergestänges verwendet, um im ersten Betriebsmodus zu erkennen, ob Abweichungen des Verteilergestänges aus der Solldrehlage vorliegen und/oder zeitnah ohne Regeleingriff eintreten würden. Dies ermöglicht eine schnelle und kostengünstige Realisierung des ersten Betriebsmodus, da auf zusätzliche Sensor- bzw. Regelgrößen und deren Verarbeitung verzichtet werden kann. Die Steuereinrichtung kann gemäß einer möglichen Ausführung somit ausgebildet sein, im ersten Betriebsmodus lediglich anhand der gemessenen Drehrate Störbewegungen des Verteilergestänges zu erkennen und zurückzuregeln. Damit kann eine aktuelle Drehlage des Verteilergestänges beibehalten werden, da im ersten Betriebsmodus angenommen wird, dass die aktuelle Drehlage mit der Solldrehlage übereinstimmt und diese Solldrehlage gehalten werden soll. Erfasste Drehbewegungen stellen somit Störbewegungen dar, resultierend von Störmomenten. Zwar kann mit der Drehrate direkt ohne weitere Verarbeitung keine aktuelle Drehlage des Gestänges bestimmt werden. Dies ist im ersten Betriebsmodus jedoch nicht erforderlich, da es hier darauf ankommt, die aktuelle Drehlage zu halten und hierzu Störbewegungen sehr schnell und zuverlässig zurückzuregeln, was der erfindungsgemäße Ansatz in vorteilhafter Weise ermöglicht.

Es wird betont, dass diese Ausführungsform nicht ausschließt, dass in anderen Betriebssituationen oder in anderen Betriebsmodi weitere Sensorgrößen verwendet werden, beispielsweise um die Solldrehlage des Verteilergestänges festzulegen oder die Ist-Drehlage im Vergleich zur Solldrehlage zu bestimmen. So können beispielsweise Abstandssensoren zum Einsatz kommen, die den Abstand des Verteilergestänges zum Boden oder einem Pflanzenstand messen. Eine sich ändernde Neigung des Bodenprofils kann z. B. mit derartigen Abstandssensoren, z. B. ausgeführt als am Verteilergestänge angeordnete Ultraschallsensoren, erkannt werden und entsprechend bei Bedarf eine neue Solldrehlage festgelegt werden. In einem zweiten Betriebsmodus kann dann das Verteilergestänge auf diese neue Solldrehlage eingestellt werden. Nach Erreichen der neuen Solldrehlage wird der zweite Betriebsmodus beendet und anschließend im ersten Betriebsmodus eine erfindungsgemäße Regelung der Gestängedrehlage auf Basis der gemessenen Drehrate durchgeführt, um die neue Solldrehlage zu halten.

Die erste Sensoreinrichtung kann an einem Mittelteil des Verteilergestänges angeordnet sein.

Eine weitere bevorzugte Ausführungsform sieht vor, dass die erste Sensoreinrichtung als Drehratensensor ausgeführt ist, der eine Drehgeschwindigkeit des Verteilergestänges erfasst. Der Drehratensensor kann als Gyroskop ausgeführt sein. Der Drehratensensor, z. B. das Gyroskop, kann am Mittelteil des Verteilergestänges angeordnet sein.

Gemäß einer Ausführungsform kann der Schwellenwert auf einen Wert festgelegt sein, der kleiner als 0,1 rad/s ist. Dieser Bereich hat sich als besonders vorteilhaft herausgestellt, um ein "Überregeln" zu verhindern, so dass ein kleiner Bereich von Drehraten zugelassen wird, die bei typischen Arbeitsvorgängen derartiger Verteilmaschinen in der Regel zu keiner oder zu keinen merklichen Abweichungen von der Solldrehlage führen. Typische Störmomente führen oftmals zu positiven wie auch negativen Schwankungen der Drehrate um den Nullpunkt, so dass diese, falls sie nicht über einen Schwellenwert liegen, in der Regel ausgemittelt werden.

Gemäß einer Variante dieser Ausführungsform kann der Schwellenwert auf einen Wert festgelegt sein, der kleiner als 0,05 rad/s ist oder weiter vorzugsweise kleiner als 0,025 rad/s ist. Diese Variante erhöhen zwar den Regelaufwand etwas, vermeiden jedoch zuverlässiger, dass auch kleine Störbewegungen kumuliert zu einer unerwünschten Auslenkung aus der Solldrehlage führen.

Ferner besteht auch die Möglichkeit, dass der Schwellenwert auf null festgelegt ist. Gemäß dieser Ausführungsform erfolgt somit im ersten Betriebsmodus bei jeder gemessenen Abweichung der Drehrate von null ein Regeleingriff. Dies bietet den Vorteil, dass vermieden wird, dass auch sehr kleine Abweichungen von null über eine gewissen Zeit zu einer ungewünschten Abweichung von der Solldrehlage führen.

Gemäß einer weiteren Ausführungsform kann die landwirtschaftliche Verteilmaschine eine Sensoreinrichtung zur Erfassung einer Drehlage des Verteilergestänges umfassen, die nachfolgend als zweite Sensoreinrichtung bezeichnet wird. Die zweite Sensoreinrichtung kann ausgebildet sein, eine Relativdrehung zwischen Trägerfahrzeug und Verteilergestänge zu erfassen. Hierzu kann die zweite Sensoreinrichtung einen zwischen Trägerfahrzeug und Verteilergestänge angeordneten Drehwinkelsensor umfassen. Hiermit kann eine Grundstellung des Verteilergestänges gegenüber einer Referenzebene, die einer Lage des Verteilergestänges gegenüber dem Trägerfahrzeug entspricht, und/oder gegenüber dem Trägerfahrzeug bestimmt werden. Alternativ oder zusätzlich kann die zweite Sensoreinrichtung eine Verstellwegmesseinrichtung der Stelleinrichtung, die ausgebildet ist, einen Verstellweg der Stelleinrichtung zu erfassen, umfassen. Über die Erfassung des Verstellwegs, was beispielhaft bei einem Verstellzylinder dem Verfahrweg des Kolbens des Verstellzylinders entspricht, kann ebenfalls auf die Verdrehung des Verteilergestänges und damit dessen Relativdrehung zum Trägerfahrzeug geschlossen werden.

Die zweite Sensoreinrichtung kann alternativ oder zusätzlich ausgebildet sein, eine Drehlage des Verteilergestänges zur Erdbeschleunigungsrichtung oder zur Horizontalen zu bestimmen und einen am Verteilergestänge angeordneten Drehwinkelsensor umfassen. Der Neigungssensor kann ein Neigungssensor vom Schwerkrafttyp sein, d. h. ein Neigungssensor, der eine Richtung des Verteilergestänges zur Erdbeschleunigung misst. Alternativ oder zusätzlich kann die zweite Sensoreinrichtung eine am Verteilergestänge angeordnete Abstandssensorik, beispielsweise eine Ultraschallsensorik, umfassen, wobei die Abstandssensorik ausgebildet ist, einen Abstand des Verteilergestänges zum Boden und/oder Pflanzenbestand zu erfassen. Aus diesem Abstand kann ebenfalls eine Drehlage des Verteilergestänges zur Horizontalen bestimmt werden.

Mittels dieser zweiten Sensoreinrichtung kann somit eine Drehlage des Verteilergestänges gemessen werden, z. B. um in einem zweiten Betriebsmodus die aktuelle Drehlage auf eine neue Solldrehlage einzustellen. Bevorzugt ist jedoch vorgesehen, dass im ersten Betriebsmodus als Regelgröße nur die gemessene Drehrate verwendet wird, um Störmomente auszuregeln, die Abweichungen der Drehlage des Verteilergestänges von der Solldrehlage erzeugen oder erzeugen würden.

Vorstehend wurde bereits erwähnt, dass neben dem ersten Betriebsmodus ein zweiter Betriebsmodus durchgeführt werden kann. Der zweite Betriebsmodus kann dazu dienen, die Drehlage des Verteilergestänges gezielt zu verändern, um die Drehlage auf einen neuen Sollwert einzustellen. Beispielsweise soll bei einer Einfahrt in eine Hanglage die Drehlage des Verteilergestänges angepasst werden, um sich wieder parallel zum geänderten Geländeprofil auszurichten. Hierbei kann eine neue Solldrehlage bestimmt und im Rahmen eines zweiten Betriebsmodus eingestellt werden. Hierbei wird im zweiten Betriebsmodus mittels der Stelleinrichtung eine Stellkraft zur Verdrehung des Verteilergestänges in das Verteilergestänge eingeleitet, bis die neue Solldrehlage eingestellt ist. Nach Erreichen der neuen Solldrehlage kann wieder zum ersten Betriebsmodus gewechselt werden, um diese neue Solldrehlage zu halten.

Die Stelleinrichtung kann als eine druckmittelbetätigte Stelleinrichtung ausgebildet sein, beispielsweise als eine pneumatisch oder hydraulisch arbeitende Stelleinrichtung.

Ferner kann die druckmittelbetätigte Stelleinrichtung als eine druckmittelbetätigte Stelleinrichtung mit zwei im Wesentlichen entgegengesetzt wirkenden Wirkbereichen ausgeführt sein, mittels der eine Stellkraft erzeugbar ist, um das Verteilergestänge um die Schwenkachse zu bewegen. Hierbei ist jedem Wirkbereich ein Druckmittelregelventil zugeordnet zur Steuerung eines an dem jeweiligen Wirkbereich anliegenden Drucks oder Volumenstroms. Die druckmittelbetätigte Stelleinrichtung umfasst mindestens einen druckmittelbetätigten Aktuator.

Mit "Wirkbereich" der Stelleinrichtung bzw. des Aktuators ist ein Bereich der Stelleinrichtung bzw. des Aktuators bezeichnet, in welchem die Druckkraft von Druckmittel in eine Bewegung eines Stellorgans der Stelleinrichtung bzw. des Aktuators umgesetzt wird oder umsetzbar ist. Unter "zwei im Wesentlichen entgegengesetzt wirkenden" Wirkbereichen soll verstanden werden, dass eine Druckkraft von Druckmittel in dem einen Wirkbereich eine Verstellkraft auf das Verteilergestänge in der einen Richtung um die Schwenkachse erzeugt und eine Druckkraft von Druckmittel in dem anderen Wirkbereich eine Verstellkraft auf das Verteilergestänge in der entgegengesetzten Richtung um die Schwenkachse erzeugt. Anders ausgedrückt kann für jede Richtung zum Verschwenken des Verteilgestänges (im Uhrzeigersinn oder im Gegenuhrzeigersinn) ein Druckmittelregelventil verwendet werden.

Die Steuereinrichtung ist ferner ausgebildet, in Abhängigkeit von der erfassten Drehrate des Verteilergestänges eine Sollwertvorgabe eines an den Wirkbereichen wirkenden Drucks oder einer an den Wirkbereichen wirkenden Stellkraft (Druckkraft) des Druckmittels zu bestimmen und die Druckmittelregelventile jeweils elektrisch gesteuert auf die Sollwertvorgabe einzustellen.

Diese Ausführungsform der landwirtschaftlichen Verteilmaschine bietet den besonderen Vorzug, dass die Druckmittelregelventile in Kombination mit dem drehraten-basierten Regelansatz im ersten Betriebsmodus zum Halten einer vorgegebenen Solldrehlage eine besonders präzise und schnelle Steuerung der an den Wirkbereichen wirkenden Kräfte zur Entgegenwirkung einer (unerwünscht) auftretenden Störbewegung und Zurückregeln einer entsprechenden Verstellung des Verteilergestänges ermöglichen.

Gemäß einer möglichen Weiterbildung kann die Steuereinrichtung ferner ausgebildet sein, die Druckmittelregelventile jeweils anhand einer vorbestimmten Kennlinie der Druckmittelregelventile elektrisch gesteuert auf die Sollwertvorgabe einzustellen. Die Kennlinie der Druckmittelregelventile legt einen Zusammenhang zwischen Sollwertvorgabe, z. B. Druck an den Wirkbereichen, und elektrischem Ansteuerungssignal, z. B. der Bestromung, der Druckmittelregelventile fest. Dies hat den Vorteil, dass über die Kennlinie der Druckmittelregelventile der Druck auf das Verteilergestänge präzise an die Sollwertvorgabe angepasst werden kann.

Die Druckmittelregelventile arbeiten daraufhin so, dass die gewünschte Sollwertvorgabe am jeweiligen Wirkbereich eingestellt wird, z. B. dort der gewünschte Druck oder Volumenstrom eingestellt wird. Die Kennlinie kann in der Steuereinrichtung oder einem Datenspeicher der landwirtschaftlichen Maschine hinterlegt sein. Es kann eine Kennlinie hinterlegt sein, die für beide Druckmittelregelventile gilt, falls diese z. B. baugleich ausgeführt sind. Es kann auch für jedes Druckmittelregelventil eine eigene Kennlinie hinterlegt sein.

Gibt beispielsweise die aus der Drehrate bestimmte Sollwertvorgabe vor, welcher Druck oder Volumenstrom des Druckmittels an den Wirkbereichen erforderlich ist, kann anhand der Kennlinie das elektrische Ansteuerungssignal der Druckmittelregelventile, z. B. deren Bestromung, ermittelt und zur aktiven Steuerung und/oder Regelung der Drehlage des Verteilgestänge verwendet werden. Soll lediglich beispielhaft ein definierter Differenzdruck oder eine definierte Differenzkraft an den Wirkbereichen vorliegen, werden die vorzugsweise gegensinnig arbeitenden Druckmittelregelventile jeweils auf Basis der in der Steuerungseinrichtung hinterlegten Kennlinie(n) entsprechend elektrisch angesteuert und somit ein definierter Differenzdruck bzw. eine definierte Differenzkraft erzeugt.

Die Erfassung von Störbewegungen des Verteilergestänges und das Zurückregeln der Störbewegungen anhand der Regelung der Drehrate im ersten Betriebsmodus ermöglicht es, ohne merkliche Verzögerungen eine genaue Sollwertvorgabe des an den Wirkbereichen wirkenden Drucks oder der an den Wirkbereichen wirkenden Stellkraft des Druckmittels zur elektrischen Ansteuerung der Druckmittelregelventile zu bestimmen. Hieraus ergibt sich ferner die Möglichkeit, eine Technik zur Drehlagensteuerung und/oder -regelung des Verteilergestänges bereitzustellen, bei welcher optional keine Drucksensoren, Kraftsensoren und/oder dergl. vonnöten sind, die mit der druckmittelbetätigten Stelleinrichtung gekoppelt sind. Entsprechend sieht eine Ausführungsform vor, dass kein Druckmittelsensor, insbesondere kein Drucksensor und/oder kein Differenzdrucksensor, im Druckmittelkreis außerhalb der Druckmittelregelventile, insbesondere den Druckmittelleitungsstrecken der druckmittelbetätigten Stelleinrichtung angeordnet ist und/oder zur Ansteuerung der Druckmittelregelventile verwendet wird. Selbstverständlich können die Druckmittelregelventile, z. B. Druckregelventile, eine integrierte Drucksensorik, d. h. eine innerhalb der Druckregelventile angeordnete Drucksensorik, aufweisen, um den Druck zu regeln. Alternativ oder zusätzlich kann eine Ausführungsform vorsehen, dass die druckmittelbetätigte Stelleinrichtung keinen Sensor aufweist, der eine Auslenkung eines Stellorgans der Stelleinrichtung oder ein auf das Stellorgan wirkende Kraft erfasst, wobei die Stelleinrichtung vorzugsweise hierzu keinen Wegsensor, keinen Dehnungssensor und keinen Kraftsensor aufweist.

Ein besonderer Vorzug dieser Ausführungsformen ist daher, dass ein besonders kosteneffizienter Aufbau ermöglicht wird, da zur Regelung oder Steuerung der Drehlage des Verteilergestänges im ersten Betriebsmodus, d. h. zum Halten einer Solldrehlage auch bei auftretenden Störmomenten, vorzugsweise nur die erste Sensoreinrichtung zur Erfassung von Störbewegungen des Gestänges verwendet wird, und zusätzlich zu den Druckmittelregelventilen jedoch keine weitere Drucksensorik oder Kraftsensoren erforderlich sind, die mit der Stelleinrichtung gekoppelt oder in diese integriert sind.

Entsprechend ist in einer weiteren Ausführungsform die Steuereinrichtung ausgebildet, die Sollwertvorgabe ohne einen sensorisch erfassten Druckwert oder Volumenstromwert des Druckmittels zu bestimmen. Ferner kann die Steuereinrichtung im ersten Betriebsmodus ausgebildet sein, einen Steuerstrom zur Ansteuerung der Druckmittelregelventile ausschließlich anhand der Kennlinie und der mittels der ersten Sensoreinrichtung erfassten Drehrate des Verteilergestänges zu bestimmen. Dies bietet den Vorteil, dass eine besonders effiziente Steuerung und/oder Regelung der Drehlage des Verteilergestänges ermöglicht wird.

Gemäß einer weiteren Ausführungsform der landwirtschaftlichen Verteilmaschine mit der druckmittelbetätigten Stelleinrichtung kann die Stelleinrichtung (8) ausgebildet sein, bei einer Ansteuerung mit konstantem Stellsignal durch die Stelleinrichtung, Druckschwankungen in Druckmittelkreis selbsttätig mittels der Druckregelventile auszuregeln. Eine Ansteuerung der Stelleinrichtung mit konstantem Stellsignal kann bedeuten, dass die Steuereinrichtung die Bestromung der Druckregelventile in dieser Phase nicht verändert.

Alternativ oder zusätzlich kann gemäß einer weiteren Ausführungsform der landwirtschaftlichen Verteilmaschine mit der druckmittelbetätigten Stelleinrichtung vorgesehen sein, dass die Steuereinrichtung ausgebildet ist, falls die bestimmte Drehrate kleiner als der Schwellenwert ist, ein der Sollwertvorgabe zugeordnetes elektrisches Ansteuerungssignal der Druckmittelregelventile konstant zu halten, weiter vorzugsweise derart, dass beispielsweise durch Wankbewegungen des Trägerfahrzeugs oder durch Gestängebewegungen verursachte Druckspitzen oder Kräfteschwankungen an den Wirkbereichen durch die Druckmittelregelventile selbstständig ausgeregelt werden und/oder indem der auf Basis der Sollwertvorgabe vorgegebene Druck oder die entsprechend vorgegebene Kraft konstant gehalten wird.

Ein besonderer Vorzug dieser Ausführungsform liegt somit darin, dass zwei sich überlagernde Regelkreise zum Halten der Solldrehlage im ersten Betriebsmodus eingesetzt werden: Ein erster innerer Regelkreis der Stelleinrichtung, realisiert durch die Druckmittelregelventile, welcher Druckspitzen oder Kräfteschwankungen an den Wirkbereichen durch die Druckmittelregelventile selbstständig ausregelt, solange das elektrische Ansteuerungssignal der Druckmittelregelventile konstant gehalten wird. Ferner ein zweiter Regelkreis, bei dem die Steuereinrichtung in Abhängigkeit von der erfassten Drehrate die Stelleinrichtung ansteuert, um mittels der Stelleinrichtung die erfasste Drehrate als Regelgröße auf einen Sollwert zu regeln, der betragsmäßig zwischen Null und einem Schwellenwert liegt.

Die Kombination dieser beiden Regelkreise ermöglicht somit, eine besonders schnelle, präzise und konstruktiv vergleichsweise einfache Regelung des Verteilergestänges bereitzustellen, die auch schnell variierende Störmomente zuverlässig ausregeln kann, ohne dass diese zu merkbaren unerwünschten Veränderungen der Drehlage des Verteilergestänges führen.

Entsprechend kann die Steuereinrichtung ausgebildet sein, falls die bestimmte Drehlage einer Solldrehlage des Verteilergestänges entspricht und/oder nicht mehr als um einen Schwellenwert von der Solldrehlage abweicht, den ersten Betriebsmodus durchzuführen, in dem das Verteilergestänge weitestgehend von Drehmomenten um die Schwenkachse resultierend aus Fahrzeugbewegungen um die Fahrzeuglängsachse entkoppelt ist, wobei ein der Sollwertvorgabe entsprechendes elektrisches Ansteuerungssignal der Druckmittelregelventile konstant gehalten wird.

Vorstehend wurde bereits festgestellt, dass die Steuereinrichtung ausgebildet sein kann, einen zweiten Betriebsmodus durchzuführen, um die Drehlage des Verteilergestänges gezielt auf eine neue Solldrehlage einzustellen. Gemäß einer weiteren Ausführungsform ist die Steuereinrichtung ausgebildet, im zweiten Betriebsmodus, für jeden der Wirkbereiche eine neue Sollwertevorgabe zu bestimmen, um die für die Verstellung der Drehlage notwendigen Stellkräfte zu erzeugen.

Gemäß einer möglichen Ausführungsvariante kann die Steuereinrichtung ausgebildet sei, im zweiten Betriebsmodus, für jeden der Wirkbereiche die nachfolgenden Sollwertvorgaben zu bestimmen: eine Sollwertvorgabe, nachfolgend als erste Sollwertvorgabe bezeichnet, die eine Bewegung des Verteilergestänges hin zur Solldrehlage bewirkt; eine weitere Sollwertvorgabe, nachfolgend als dritte Sollwertvorgabe bezeichnet, die ein Halten des Verteilergestänges in der Solldrehlage bewirkt, und mindestens eine weitere Sollwertvorgabe, nachfolgend als zweite Sollwertvorgabe bezeichnet, deren Wert zwischen der ersten und der dritten Sollwertvorgabe liegt. Gemäß dieser weiteren Ausführungsform ist die Steuereinrichtung ausgebildet, die Druckmittelregelventile jeweils elektrisch gesteuert zuerst auf die erste Sollwertvorgabe, dann vor Erreichen der Solldrehlage auf die mindestens eine zweite Sollwertvorgabe und bei Erreichung der Sollwertvorgabe auf die dritte Sollwertvorgabe einzustellen.

Dies bietet den Vorteil, dass bei einer Verstellung des Verteilergestänges hin in die gewünschte Solldrehlage das Verteilergestänge vor Erreichen der Solldrehlage aktiv abgebremst bzw. gedämpft wird, so dass eine schnelle Einstellung der Solldrehlage, möglichst ohne oder mit wenig Überschwingen ermöglicht wird, wobei hierzu vorteilhafterweise die Druckmittelventile lediglich auf die erste, zweite und dritte Sollwertvorgabe elektrisch angesteuert eingestellt werden müssen. Die Solldrehlage kann beispielsweise mittels am Verteilergestänge angeordneten Abstandssensoren, die den Abstand des Verteilergestänges zum Boden oder Pflanzenbestand messen, bestimmt werden, was vorstehend bereits erwähnt wurde. Die Abstandssensoren können als Ultraschallsensoren ausgeführt sein.

Um eine steuerungs- oder regelungstechnisch besonders vorteilhafte Ansteuerung der Druckmittelregelventile zu realisieren, kann hierbei optional ferner vorgesehen sein, dass die Einstellung der Druckmittelregelventile auf die erste, zweite und dritte Sollwertvorgabe anhand der vorbestimmten Kennlinie, wie vorstehend erwähnt, erfolgt. Vorzugsweise kann diese Ansteuerung der Druckmittelregelventile hierbei ausschließlich anhand der vorbestimmten Kennlinie erfolgen. Dies bedeutet, dass anhand der Kennlinie die elektrischen Ansteuerungswerte, z. B. die Bestromungswerte, für die Druckmittelventile ermittelt werden, die jeweils der ersten Sollwertvorgabe, der mindestens einen zweiten Sollwertvorgabe und der dritten Sollwertvorgabe entsprechen, und die Druckmittelregelventile dann entsprechend nur auf Basis dieser Ansteuerungswerte angesteuert werden.

Gemäß einer Variante dieser Ausführungsform ist vorgesehen, dass mehrere zweite Sollwertvorgaben für jeden Wirkbereich bestimmt werden, vorzugsweise derart, dass die dritte Sollwertvorgabe ausgehend von der ersten Sollwertvorgabe mittels der zweiten Sollwertvorgaben treppenartig ansteigend oder absteigend eingestellt wird. Hierdurch kann das Einstellen der Solldrehlage besonders präzise erfolgen und Überschwingungen besonders zuverlässig vermieden werden.

An Stelle einer treppenartigen bzw. gestuften Einstellung des Übergangs von der dritten Sollwertvorgabe ausgehend von der ersten Sollwertvorgabe kann auch eine Vielzahl zweiter Sollwertvorgaben bestimmt werden, so dass ein kontinuierlicher, oder nahezu kontinuierlicher, Übergang realisiert wird. In der Praxis hat sich jedoch im Rahmen der Erfindung gezeigt, dass aufgrund der vergleichsweisen großen Trägheit des Verteilergestänges einige wenige zweite Sollwertvorgaben ausreichend sind.

Alternativ oder zusätzlich kann die Steuereinrichtung ausgebildet sein, die mindestens eine zweite Sollwertvorgabe, vorzugsweise deren Anzahl und/oder Abweichung von der ersten und dritten Sollwertvorgabe, in Abhängigkeit von der Abweichung der bestimmten Drehlage von der Solldrehlage des Verteilergestänges festzulegen. Hierdurch kann die Einstellung der gewünschten Solldrehlage weiter verbessert werden.

Gemäß einer besonders vorteilhaften Ausführungsform sind die Druckmittelregelventile als Druckregelventile ausgeführt, beispielsweise als elektromagnetisch angesteuerte Proportional-Druckregelventile. Alternativ zu einer Druckregelung an den Wirkbereichen kann auch eine Volumenstromregelung realisiert sein. Gemäß dieser Variante können die Druckmittelregelventile als Volumenstrom-Regelventile ausgeführt sein, beispielsweise als elektromagnetisch angesteuerte Volumenstrom-Regelventile.

In einer Ausführungsform kann die Stelleinrichtung zur Ausbildung der zwei im Wesentlichen entgegengesetzt wirkenden Wirkbereiche einen doppeltwirkenden fluidischen Druckmittelzylinder aufweisen. Alternativ hierzu kann die Stelleinrichtung zur Ausbildung der zwei im Wesentlichen entgegengesetzt wirkenden Wirkbereiche zwei gegensinnig arbeitende, einfachwirkende, fluidische Druckmittelzylinder aufweisen. In einer besonders vorteilhaften Variante können die zwei gegensinnig arbeitenden einfachwirkenden fluidischen Druckmittelzylinder jeweils als Plungerzylinder ausgeführt sein.

Die vorgenannten fluidischen Druckmittelzylinder können als hydraulisch arbeitende oder pneumatisch arbeitende Druckmittelzylinder ausgeführt sein.

Gemäß einer Ausführungsform ist die Stelleinrichtung ausgebildet, das Verteilergestänge wahlweise in beide Drehrichtungen um die in Fahrtrichtung verlaufende Schwenkachse mit einer Winkelgeschwindigkeit von mindestens 0,1 rad/s, weiter vorzugsweise von mindestens 0,2 rad/s zu bewegen.

Hierzu ist die Stelleinrichtung entsprechend auszulegen, z. B. indem eine Verfahrgeschwindigkeit des am Gestänge angreifenden Stellorgans der Stelleinrichtung, z. B. eines Hydraulik- oder Pneumatikzylinders, unter Berücksichtigung des wirkenden Hebelarms des Stellorgans entsprechend groß gewählt wird.

Vorstehend wurde bereits erwähnt, dass die Druckmittelregelventile in Kombination mit der im ersten Betriebsmodus durchgeführten Regelung der von der ersten Sensoreinrichtung erfasste Drehrate als Regelgröße auf einen Sollwert, der betragsmäßig zwischen Null und einem Schwellenwert liegt, eine besonders präzise und schnelle Steuerung der an den Wirkbereichen wirkenden Kräfte zur Entgegenwirkung einer auftretenden Neigung oder zur bewussten Verstellung des Verteilergestänges ermöglichen. Hierfür ist es von großem Vorteil, etwaige in das Verteilergestänge eingeleitete Störmomente oder Druckspitzen an den Wirkbereichen schnell auszuregeln, bevor diese zu einer unerwünschten Veränderung der Drehlage des Verteilergestänges führen. Dies kann mit einer solchen Stelleinrichtung, mit der Winkelgeschwindigkeiten von mindestens 0,1 rad/s, weiter vorzugsweise mindestens 0,2 rad/s des Verteilergestänges um die Schwenkachse erzielt werden, zuverlässig realisiert werden. Gemäß einem vorteilhaften Aspekt ist die Stelleinrichtung daher ausgebildet, das Verteilergestänge um die Schwenkachse wahlweise mit Winkelgeschwindigkeiten bewegen zu können, die mindestens 0,1 rad/s oder mindestens 0,2 rad/s groß sind. Ferner kann die Stelleinrichtung ausgebildet sein, Verfahrgeschwindigkeiten zu erzielen, die im Bereich zwischen 100 mm/s und 500 mm/s liegen.

Ferner kann an jedem Wirkbereich der Stelleinrichtung je eine Druckmittelleitungsstrecke angeschlossen sein, durch welche den Wirkbereichen das Druckmittel zuführbar und aus diesen abführbar ist. Hierbei ist in jeder Druckmittelleitungstrecke eines der Druckmittelregelventile zur Steuerung eines an dem jeweiligen Wirkbereich anliegenden Drucks oder Volumenstroms angeordnet. Ferner kann vorgesehen sein, dass den Druckmittelregelventilen jeweils kein Sperrventil zugeordnet ist, d. h. in einer das Druckmittelventil aufweisenden Druckmittelleitungsstrecke ist gemäß dieser Variante nicht noch ein Sperrventil angeordnet.

Die landwirtschaftliche Verteilmaschine kann eine Feldspritze sein. Gemäß dieser Ausführungsform ist das Verteilgestänge ein Spritzgestänge mit beidseits des Trägerfahrzeugs abstehenden Auslegern sowie an diesem angeordneten, mit einem Speicher für mindestens einen flüssigen und/oder festen Wirkstoff verbundenen und/oder verbindbaren, Ausbringungsmitteln, wie beispielsweise mit einem Spritzmitteltank verbundene und/oder verbindbare Spritzdüsen.

Die landwirtschaftliche Maschine kann ein pneumatischer Düngerstreuer sein. Der Düngerstreuer kann ein Düngerstreuer zum Verteilen von körnigen Düngemitteln sein. Der Düngerstreuer kann einen Vorratsbehälter für das zu verteilende Düngemittel aufweisen. Der Düngerstreuer kann mehrere, am Verteilergestänge angeordnete Verteilelemente zum Ausbringen von körnigem Dünger aufweisen. Die Verteilelemente können jeweils einen Prallteller aufweisen.

Die landwirtschaftliche Verteilmaschine kann als eine selbstfahrende oder als eine mittels eines Zugfahrzeugs koppelbare bzw. gezogene oder als an einem Zugfahrzeug anbaubare und/oder angebaute landwirtschaftliche Verteilmaschine ausgebildet sein. Die selbstfahrende Verteilmaschine kann zudem eine autonom fahrende Landmaschine sein, beispielsweise eine vollautonom oder teilautonom fahrende Landmaschine.

Das Verteilergestänge, das zumindest um eine in Fahrtrichtung verlaufende Schwenkachse bewegbar am Trägerfahrzeug mittelbar oder unmittelbar angeordnet ist, kann an einem Träger gehaltert sein, der wiederum beispielsweise mit einem Aufbau- oder Rahmenabschnitt oder einer Rahmenkonstruktion des Trägerfahrzeugs und/oder mit einem starr oder beweglich gelagerten Stützabschnitt des Trägerfahrzeugs gekoppelt ist. Ferner kann der Träger höhenverstellbar an dem Aufbau- oder Rahmenabschnitt oder einer Rahmenkonstruktion des Trägerfahrzeugs angebracht sein, wobei die Höhenverstellung insbesondere mittels eines zwischen der Rahmenkonstruktion und dem Träger angebrachten Viergelenks, z. B. in Form eines Parallelogramms, erfolgen kann. Auch kann die Höhenverstellung mittels eines zwischen der Rahmenkonstruktion und dem Träger angebrachten Linearschlittens erfolgen. Zur Höhenverstellung kann dem Parallelogramm oder dem Linearschlitten z. B. ein Linearantrieb in Form eines Hydraulik- oder Pneumatikzylinders zugeordnet sein, so dass der Höhenabstand zwischen dem Verteilgestänge und einer Bodenoberfläche bzw. einem Pflanzenbestand variabel veränderbar ist.

Die Schwenkachse kann ferner beispielsweise durch ein Kugelgelenk ausgebildet sein. Das Kugelgelenk ermöglicht nicht nur eine Verschwenkung um die Schwenkachse, sondern ferner um eine weitere Achse.

Das Verteilgestänge kann ein Mittelteil und um aufrechte, d. h. vertikale, Achsen schwenkbar zum Mittelteil angeordnete seitliche Ausleger aufweisen, wobei die Ausleger sich aus zwei oder mehr, wiederum um aufrechte Achsen schwenkbar zueinander angeordnete, Segmente zusammensetzen können. Alternativ oder zusätzlich besteht die Möglichkeit, dass die Ausleger und vorzugsweise auch deren Segmente in einer senkrecht zur Vorwärtsfahrtrichtung der Verteilmaschine angeordneten Ebene relativ zum Mittelteil verschwenkbar sind zur besseren Anpassung an ein Bodenprofil. Letzteres bedeutet, dass die Segmente um eine in Fahrtrichtung verlaufende Achse relativ zueinander verschwenkbar sein können.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine perspektivische Ansicht einer landwirtschaftlichen Verteilmaschine gemäß einer Ausführungsform der Erfindung;
- Figur 2: einen Detailausschnitt auf ein Verteilergestänge an einem Rahmen mit einer druckmittelbetätigten Stelleinrichtung gemäß einer Ausführungsform der Erfindung;
- Figur 3: eine schematische Ansicht einer Steuereinrichtung und der druckmittelbetätigten Stelleinrichtung der landwirtschaftlichen Verteilmaschine gemäß einem Ausführungsbeispiel;
- Figur 4: eine Kennlinie zur Ansteuerung der Druckregelventile gemäß einem Ausführungsbeispiel;
- Figur 5: ein schematisches Blockdiagramm zur Illustration der Steuerung oder Regelung der Drehlage des Verteilergestänges gemäß einem Ausführungsbeispiel;
- Figur 6: ein schematisches Blockdiagramm zur Illustration eines drehraten-basierten Regelung im ersten Betriebsmodus gemäß einem Ausführungsbeispiel;
- Figur 7: ein Blockdiagramm zur Illustration der drehraten-basierten Regelung im ersten Betriebsmodus gemäß einem Ausführungsbeispiel;
- Figur 8: ein schematisches Blockdiagramm zur Illustration eines zweiten Betriebsmodus gemäß einem Ausführungsbeispiel; und
- Figur 9: ein beispielhafter zeitlicher Verlauf der Sollwertvorgabe im zweiten Betriebsmodus gemäß einem Ausführungsbeispiel.

Gleiche oder funktional äquivalente Elemente sind in allen Figuren mit denselben Bezugszeichen bezeichnet und zum Teil nicht gesondert beschrieben.

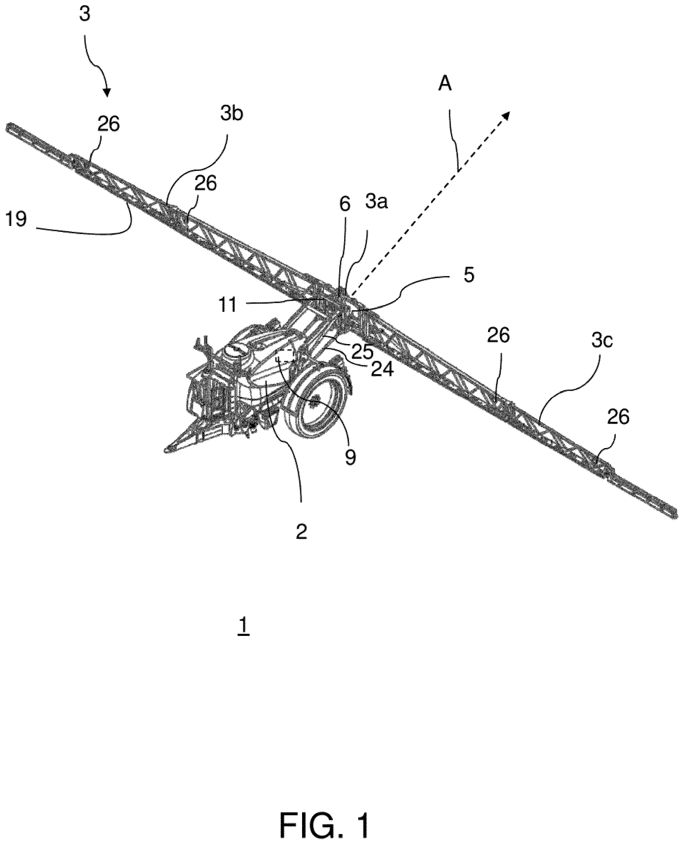

Figur 1 zeigt eine perspektivische Ansicht einer landwirtschaftlichen Verteilmaschine 1 gemäß einer Ausführungsform der Erfindung: Die landwirtschaftliche Verteilmaschine ist beispielhaft als gezogene Feldspritze ausgeführt. Die Verteilmaschine 1 umfasst ein Trägerfahrzeug 2 und ein Verteilergestänge 3 zum Ausbringen von Düngemittel oder Pflanzenschutzmittel. Das Verteilergestänge 3 ist zumindest um eine in Fahrtrichtung verlaufende Schwenkachse A, illustriert mit der gestrichelten Linie, bewegbar am Trägerfahrzeug 2 angeordnet. Das Verteilergestänge 3, bei einer Feldspritze als Spritzgestänge bezeichnet, umfasst ein Mittelteil 3a und zwei beidseits des Trägerfahrzeugs 2 abstehende Ausleger 3b, 3c. Entlang des Spritzgestänges sind verteilt und beabstandet Sprühdüsen bzw. Düsenstücke 19 angeordnet, die über Leitungen mit einem im Trägerfahrzeug 2 angeordneten Spritzmitteltank fluidisch verbunden sind. An jedem Ausleger 3b, 3c sind ferner jeweils zwei Abstandssensoren in Form von Ultraschallsensoren 26 angeordnet, die den Abstand des Gestänges zum Boden bzw. zum Pflanzenbestand messen.

Die Verteilmaschine 1 umfasst ferner eine Sensoreinrichtung 5 (erste Sensoreinrichtung) zur Bestimmung einer Drehrate des Verteilergestänges 3. Die Sensoreinrichtung 5 umfasst in der gezeigten Ausführungsform einen am Verteilergestänge, konkret im Bereich des Mittelteils 3a des Verteilergestänges 3, angeordneten Drehratensensor 5 in Form eines Gyroskops. Ferner ist eine zweite Sensoreinrichtung zur Erfassung einer Drehlage des Verteilergestänges 3 vorgesehen, die vorliegend als Drehwinkelsensor 6 zur Erfassung einer Relativdrehung zwischen Trägerfahrzeug 2 und Verteilergestänge 3 ausgeführt ist. Der Drehwinkelsensor 6 ist zwischen Trägerfahrzeug 2 und Verteilergestänge 3 angeordnet.

Das Verteilergestänge 3 ist am Trägerfahrzeug 2 über einen rahmenartigen Träger 11 befestigt. Hierbei ist das Verteilergestänge an einer Aufhängung 11a des Trägers 11 aufgehängt und hierüber am Träger 11 verschwenkbar befestigt. Der Träger 11 ist mittels eines Parallelogrammgestänges 24 höhenverstellbar zum Trägerfahrzeug 2 bzw. höhenverstellbar zu einer Bodenoberfläche angebracht. Zur Höhenverstellung ist dem Parallelogrammgestänge 24 ein Linearantrieb 25 in Form eines Hydraulik- oder Pneumatikzylinders derartig zugeordnet, dass der Höhenabstand zwischen dem Verteilgestänge 3 und einer Bodenoberfläche bzw. einem Pflanzenbestand variabel veränderbar ist. Der Träger 11 ist nicht um die Schwenkachse A verschwenkbar, dagegen ist das Verteilergestänge 3 um die Drehachse A verschwenkbar an der Aufhängung 11a am Träger 11 angeordnet. Die hier gezeigte Befestigung und Aufhängung des Verteilergestänges 3 am Trägerfahrzeug 2 ist lediglich beispielhaft. Aus der Praxis sind eine Vielzahl weitere Aufhängungen von Verteilergestängen am Trägerfahrzeug bekannt, die ebenfalls alternativ verwendet werden könnten.

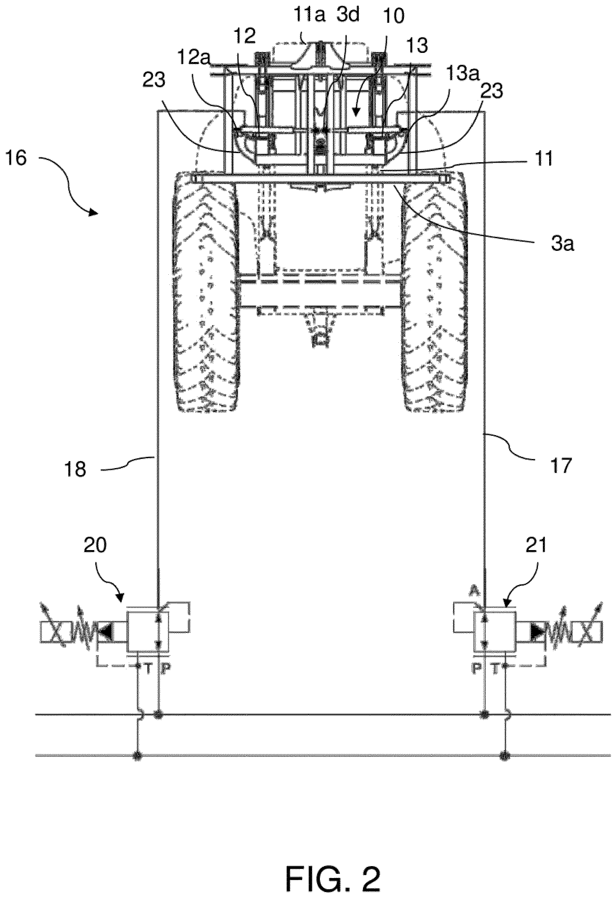

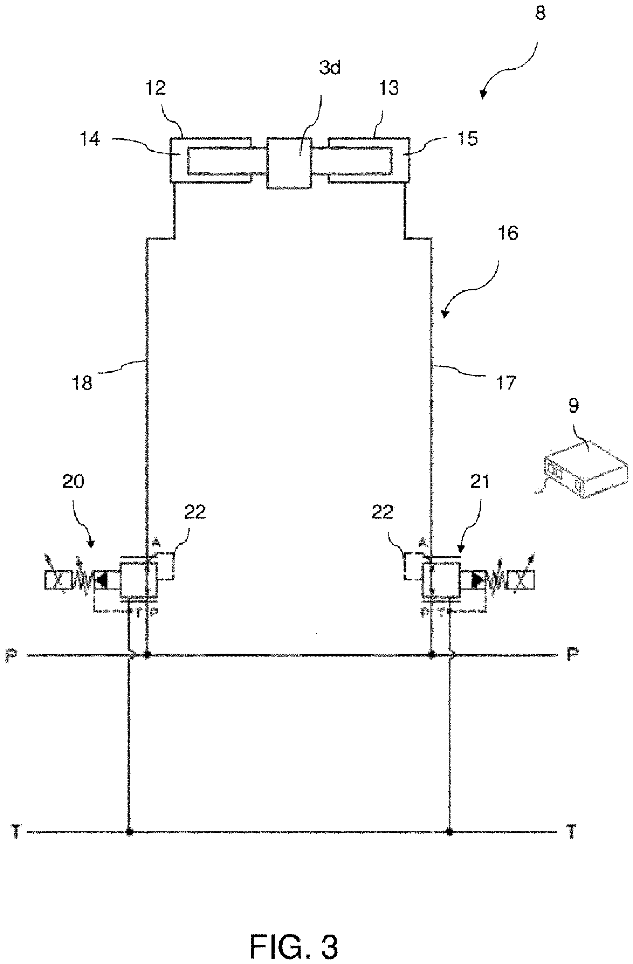

Die Verteilmaschine 1 umfasst ferner eine Steuereinrichtung 9 zur Steuerung und/oder Regelung einer Drehlage des Verteilergestänges 3 um die Schwenkachse A, wobei die Steuereinrichtung 9 hierzu eine druckmittelbetätigte Stelleinrichtung 8 ansteuert. Die Steuereinrichtung und die Stelleinrichtung 8 sind schematisch in Figur 3 dargestellt. Die druckmittelbetätigte Stelleinrichtung 8 umfasst zwei im Wesentlichen entgegengesetzt wirkende Wirkbereiche 14, 15, mittels der eine Stellkraft erzeugbar ist, um das Verteilergestänge 3 gezielt um die Schwenkachse A zu bewegen. Dies ist in der Detailansicht der Figur 2 und ferner der Figur 3 erkennbar.

Die Stelleinrichtung 8 umfasst zur Ausbildung der beiden Wirkbereiche 14, 15 ein Stellorgan 10 in Form eines Linearaktuators, hier beispielhaft als zwei einfach wirkende, gegensinnig angeordnete Hydraulik -oder Pneumatikzylinder 12, 13 (auch als Stellzylinder bezeichnet) ausgeführt. Die Stellzylinder 12, 13 sind hier ferner als Plungerzylinder ausgeführt. Die Plungerzylinder sind an ihrem gehäuseseitigen Ende 12a, 13a an einem bügelartig abstehenden Abschnitt 23 des Trägers 11 befestigt. Die Anbindung der Stellzylinder 12, 13 am Verteilergestänge 3 erfolgt am vorderen Ende der Kolbenstange an einem Abschnitt 3d des Mittelteils 3a des Verteilergestänges 3a.

Der Wirkbereich 14 (oder 15) des Stellzylinders 12 (oder 13) entspricht dem Bereich des Stellzylinders, in welchem die vom Druckmittel erzeugte Druckkraft in eine Bewegung der Kolbenstange des Stellzylinders 12, 13 umgesetzt wird.

Zur Erzeugung eines auf die Kolbenstange der Stellzylinder 12, 13 wirkenden Drucks sind die Wirkbereiche 14, 15 an einem Druckmittelkreislauf 16 angeschlossen. Hierzu ist an jedem Wirkbereich 14, 15 je eine Druckmittelleitungsstrecke 17, 18 angeschlossen, durch welche den Wirkbereichen 15, 15 ein Druckmittel, z. B. Luft oder Hydraulikflüssigkeit, zuführbar und aus diesen abführbar ist. In jeder Druckmittelleitungstrecke 17, 18 ist jeweils ein Druckregelventil 20, 21 zur Steuerung eines an dem jeweiligen Wirkbereich 14, 15 anliegenden Drucks angeordnet. Die beiden Druckregelventile 20, 21 sind als elektromagnetisch angesteuerte Proportional-Druckregelventile ausgeführt. Weitere Komponenten des Fluidkreislaufs, wie Pumpe und Fluidreservoir sind in an sich bekannter Weise ausgeführt und nicht dargestellt.

Die beiden Stellzylinder 12, 13 sind zueinander gegensinnig angeordnet, so dass zwei im Wesentlichen entgegengesetzt wirkende Wirkbereiche 14, 15 ausgebildet werden. Dies bedeutet, dass eine Druckkraft des Druckmittels in dem einen Wirkbereich 14 bzw. dem einen Stellzylinder 12 eine Verstellkraft auf das Verteilergestänge in der einen Richtung um die Schwenkachse erzeugt und eine Druckkraft von Druckmittel in dem anderen Wirkbereich 15 bzw. dem anderen Zylinder 13 eine Verstellkraft auf das Verteilergestänge in der entgegengesetzten Richtung um die Schwenkachse erzeugt. Der Druck und entsprechend die Stellkraft in dem Wirkbereich 14 wird vom Druckregelventil 20 eingestellt. Der Druck und entsprechend die Stellkraft in dem Wirkbereich 15 wird vom Druckregelventil 21 eingestellt. Durch die Regelung des an den Wirkbereichen 14, 15 bzw. den Stellzylindern 20, 21 anliegenden Druckmitteldrucks kann somit die Drehlage des Verteilergestänges 3 beeinflusst werden.

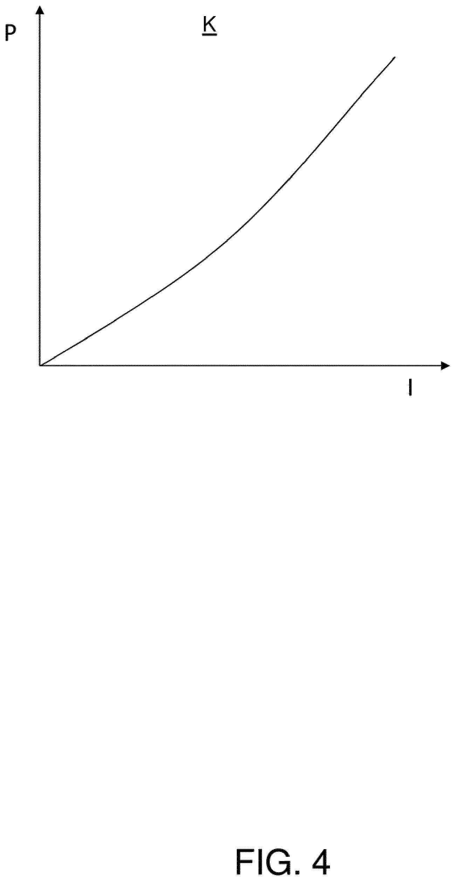

In der Steuereinrichtung 9 ist für jedes der Druckregelventile 20, 21 eine Kennlinie K hinterlegt, die einen Zusammenhang zwischen Sollwertvorgabe, z. B. eines an den Wirkbereichen zu erzeugendem Drucks P, und elektrischem Ansteuerungssignal der Druckmittelregelventile 20, 21, z. B. deren Bestromung I, festlegt, was in Figur 4 schematisch illustriert ist. Die Steuereinrichtung 9 ist ausgebildet, die Druckmittelregelventile 20, 21 jeweils anhand der Kennlinie K elektrisch gesteuert auf die Sollwertvorgabe einzustellen.

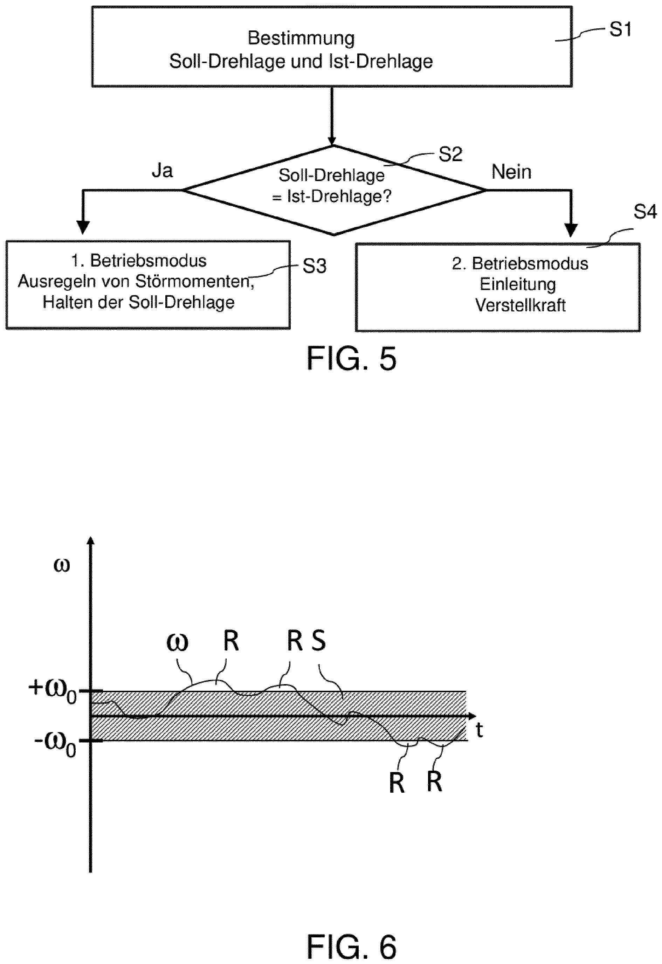

Die Funktionsweise der Steuerung oder Regelung der Drehlage des Verteilergestänges 3 ist beispielhaft anhand der Figuren 5 bis 9 illustriert. Figur 5 zeigt zunächst ein schematisches Blockdiagramm zur Illustration der Regelung der Drehlage des Verteilergestänges gemäß einem Ausführungsbeispiel. Im Arbeitsbetrieb der landwirtschaftlichen Verteilermaschine, d. h., wenn das Verteilergestänge 3 sich im ausgeklappten Zustand und damit in der Arbeitsposition befindet, ist es erforderlich, dessen Drehlage auf eine gewünschte Solldrehlage einzustellen, um z. B. einen gleichmäßigen Abstand der Sprühdüsen zum Pflanzenbestand einzustellen. Hierzu ist die Steuereinrichtung 9 programmtechnisch eingerichtet, fortlaufend zu überwachen, ob die aktuelle Drehlage des Verteilergestänges 3 der gewünschten Solldrehlage entspricht. Hierzu werden zunächst die Solldrehlage und die momentane Drehlage des Verteilergestänges 3 bestimmt (Schritt S1 in Figur 5).

Die Solldrehlage kann beispielsweise anhand der Messwerte der Ultraschallsensoren 19 ermittelt werden, die den Abstand des Verteilergestänges an den Messpunkten der Ultraschallsensoren 19 zum Boden bzw. zum Pflanzenbestand ermitteln. Die Solldrehlage kann auch anderweitig vorgegeben werden, z. B. durch eine Benutzereingabe.

Die Steuereinrichtung 9 ermittelt ferner die momentane Drehrate des Verteilergestänges 3, z. B. anhand der Messwerte des Drehwinkelsensors 6.

In Schritt S2 wird überwacht, ob die bestimmte momentane Drehlage des Verteilergestänges 3 der Solldrehlage entspricht. Dies ist der Fall, wenn die momentane Drehlage der Solldrehlage entspricht oder alternativ, nicht mehr als ein vorgegebener Schwellenwert von der Solldrehlage abweicht.

Falls die bestimmte momentane Drehlage des Verteilergestänges 3 der Solldrehlage entspricht, wird von der Steuereinrichtung 9 in Schritt S3 ein Betriebsmodus (erster Betriebsmodus) durchgeführt, in dem das Verteilergestänge 3 in seiner aktuellen Drehlage gehalten wird.

Bei Fahrt in unebenem Gelände, was bei landwirtschaftlichen Flächen in der Regel meistens der Fall ist, wankt das Trägerfahrzeug 2 jedoch ständig etwas um die Achse A, die auch parallel zur Fahrtrichtung des Trägerfahrzeugs ist. Diese Wankbewegungen des Trägerfahrzeugs 2 erzeugen Störmomente, die sich auch bei pendelnd aufgehängtem Verteilergestänge 3 aufgrund der mechanischen Kopplung über die Stelleinrichtung 8 auf das Verteilergestänge 3 zumindest zum Teil übertragen und dazu führen können, dass es zu unerwünschten Verdrehungen des Verteilergestänges 3 aus der Solldrehlage kommen kann.

Der erste Betriebsmodus S3 dient dazu, trotz derartiger Störmomente das Verteilergestänge 3 in der aktuell eingestellten Solldrehlage zu halten, in dem auf das Verteilergestänge wirkende Störmomente, die aus Bewegungen des Trägerfahrzeugs um die Längsachse resultieren, zur Haltung der Solldrehlage ausgeregelt werden. Im vorliegenden Ausführungsbeispiel erfolgt dies mittels zweier sich überlagernder Regelkreise, die gleichzeitig wirken und auf diese Weise Störmomente schnell und zuverlässig kompensieren können, bevor diese zu merklichen Abweichungen der Drehlage des Verteilergestänges 3 aus der Solldrehlage führen. Im Ergebnis führt dies dazu, dass das Verteilergestänge 3 weitestgehend von Drehmomenten um die Schwenkachse A resultierend aus Fahrzeugbewegungen um die Fahrzeuglängsachse entkoppelt ist.

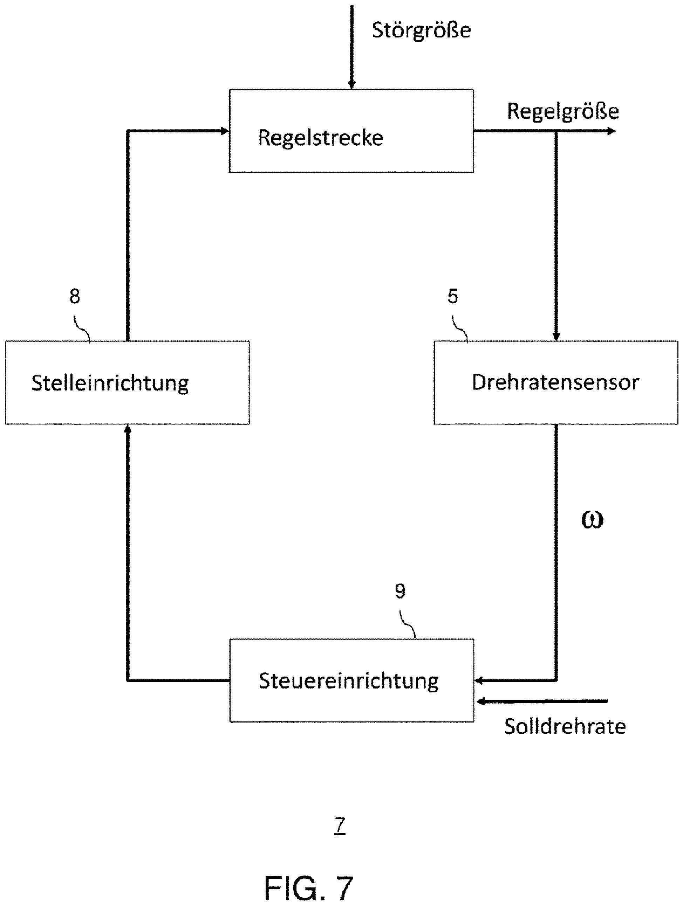

Ein erster Regelkreis 7 umfasst die Stelleinrichtung 9, die erste Sensoreinrichtung (Drehratensensor) 5 zur Ermittlung der Regelgröße und die Stelleinrichtung 8 zur Steuerung der Regelstrecke, vgl. auch die Figuren 6 und 7, die den ersten Regelkreis 7 illustrieren. Der erste Regelkreis 7 regelt die von der ersten Sensoreinrichtung 5 erfasste Drehrate ω als Regelgröße auf einen Sollwert, der betragsmäßig zwischen Null und einem Schwellenwert ω₀ liegt. Anders ausgedrückt, wird im ersten Betriebsmodus die Drehrate ω so geregelt, dass sie in dem Sollwertbereich S zwischen +ω₀ und -ω₀ liegt. Dieser Bereich ist in Figur 6 durch den schraffierten Bereich S dargestellt.

Ein optionaler zweiter Regelkreis wird im vorliegendem Ausführungsbeispiel vollständig innerhalb der Stelleinrichtung 8 durch die Druckregelventile 20, 21 ausgeführt, was nachfolgend noch erläutert wird.

Betreffend den ersten Regelkreis 7 wird von der Steuereinrichtung 9 fortlaufend eingangsseitig die vom Drehratensensor 5 ermittelte Drehrate ω verarbeitet. Hierbei prüft die Steuereinrichtung 9, ob die aktuelle Drehrate ω in einem vorgegebenen Sollwertbereich liegt, der betragsmäßig zwischen null und einem vorbestimmten Schwellenwert ω₀ für die Drehrate liegt, d. h. der Sollwertbereich liegt zwischen -ω₀ und +ω₀. Der Schwellenwert ω₀ liegt nahe bei null. Dieser Bereich ist in Figur 6 durch den schraffierten Bereich S zwischen +ω₀ und -ω₀ dargestellt, in dem ein aktiver Regeleingriff durch die Steuereinrichtung 9 nicht erfolgt.

Liegt die aktuelle Drehrate ω somit im Bereich S, kann davon ausgegangen werden, dass die Solldrehlage des Verteilergestänges kurzfristig eingehalten wird, da sich das Verteilergestänge aufgrund der Drehrate nahe null nicht dreht.

Entsprechend verändert die Steuereinrichtung 9 im Regelkreis ein Ausgangssignal zur Ansteuerung der Stelleinrichtung 8 nicht, d. h. ein Ausgangssignal zur elektrischen Ansteuerung der Druckmittelregelventile 20, 21 wird konstant gehalten, so dass die Stellkraft, die an den Wirkbereichen 14, 15 erzeugt wird, im Wesentlichen konstant gehalten wird. Mit anderen Worten wird im ersten Betriebsmodus und falls die aktuelle Drehrate ω in dem vorgegebenen Sollwertbereich S liegt, der betragsmäßig zwischen null und einem vorbestimmten Schwellenwert ω₀ für die Drehrate liegt, zunächst das aktuelle elektrisches Ansteuerungssignal der Druckmittelregelventile 20, 21 konstant gehalten.

Treten dann beispielsweise durch Wankbewegungen des Trägerfahrzeugs oder durch Gestängebewegungen verursachte Druckspitzen oder Kräfteschwankungen an den Wirkbereichen 14, 15 auf, werden diese durch die Druckmittelregelventile 20, 21 selbstständig ausgeregelt, indem der oder die aktuell über die aktuelle Bestromung der Druckregelventile 20, 21 vorgegebene Druck oder Kraft an den Wirkbereichen 14, 15 konstant gehalten wird. Das anhand der Kennlinie K ermittelte konstante elektrische Ansteuerungssignal der Druckmittelregelventile 20, 21 stellt sicher, dass in das Verteilergestänge 3 eingeleitete Störmomente, z. B. resultierend aus Wankbewegungen des Trägerfahrzeugs, in vielen Fällen sofort ausgeglichen, z. B. ausregegelt werden, so dass diese erst gar nicht zu einer unerwünschten Veränderung der Drehlage und unerwünschten Verstellung des Verteilergestänges führen.

Die Druckregelventile 20, 21 haben einen Druckbereich von 0 Bar bis 120 Bar. Damit z. B. keine unerwünschte Stellkraft in das Verteilergestänge 3 eingeleitet wird, werden beispielsweise beide Wirkbereiche 14, 15 der Stelleinrichtung mit einem konstanten Druck, lediglich beispielhaft z. B. 30 Bar, als Sollwertvorgabe beaufschlagt. Anders ausgedrückt, werden im ersten Betriebsmodus beide Wirkbereiche 14, 15 bzw. die Zylinderkammern der Stellzylinder 12, 13 mit z. B. 30 Bar beaufschlagt.

Kommt es nun beispielsweise durch Gestängebewegungen zu kurzzeitigen "Druckspitzen" an den Wirkbereichen 14, 15, werden diese mittels der Druckregelventile 20, 21 entsprechend in vielen Fällen sofort ausgeregelt, so dass derartige kurzfristige Druckspritzen gar nicht erst zu einer unerwünschten Verstellung des Verteilergestänges 3 führen können. Anders ausgedrückt bedeutet dies, dass die Druckregelventile 20, 21 ausgebildet sind, einen auf Basis der Kennlinie K von der Steuereinrichtung 9 über die entsprechende Bestromung eingestellten Druck selbstständig konstant zu halten. Dargestellt wird dies durch die mit dem Bezugszeichen 22 gekennzeichnete Leitungsverbindung am Druckregelventil 20, 21. Zusätzliche Drucksensoren sind demnach nicht notwendig. Die Kräfte halten sich somit selbstständig in Waage. Auf das Verteilergestänge 3 einwirkende Störmomente, z. B. resultierend aus Wankbewegungen des Trägerfahrzeugs 2, können somit auf effiziente Weise in vielen Fällen bereits durch die Druckregelventile 20, 21 selbstständig ausregelt werden, bevor diese als unerwünschte Stellkräfte zu einer Verstellung der Drehlage des Verteilergestänges 3 führen.

In diesem Sinne findet ein weiterer (zweiter) Regelkreis innerhalb der Stelleinrichtung 8 statt, bedingt durch die Funktionsweise der Druckregelventile.

Erst wenn diese eigene Regelung der Druckregelventile 20, 21 nicht ausreicht, z. B. die Störmomente zu stark oder zu abrupt auftreten und die erfasste Drehrate ω aus dem Bereich S heraustritt, d. h. größer als +ω₀ oder kleiner als -ω₀ ist (in Figur 6 dargestellt durch die Bereiche R), greift der in Figur 7 dargestellte "äußere" Regelkreis 7 korrigierend ein. Falls somit im ersten Betriebsmodus die momentane Drehrate ω des Verteilergestänges 3 betragsmäßig den Schwellenwert ω₀ übersteigt, verändert die Stelleinrichtung 8 das Stellsignal für die Stelleinrichtung 8. Hierbei wird das elektrische Ansteuersignal für die Druckregelventile 20, 21 derart verändert, dass die an den Wirkbereichen 14, 15 erzeugte Kraft der Drehung des Verteilergestänges 3 mit der Drehrate ω entgegenwirkt, so dass die Drehrate ω kleiner wird und wieder in den Bereich S zurückfällt.

Hierbei kann eine weitere in der Steuereinrichtung 9 hinterlegte Kennlinie (nicht dargestellt) verwendet werden, die die Veränderung der Bestromung der Druckmittelregelventile 20, 21 in Abhängigkeit davon angibt, wie stark die Drehrate ω betragsmäßig den Schwellenwert +ω₀ überschreitet. Diese Kennlinie und die vorstehende Kennlinie K können beispielsweise für eine landwirtschaftliche Verteilmaschine vorab experimentell ermittelt und festgelegt werden.

Wenn jedoch in Schritt S2 ermittelt wird, dass die aktuelle Drehlage nicht der Solldrehlage entspricht, z. B. weil aufgrund einer Einfahrt in eine Hanglage eine neue Solldrehlage vorgegeben wird, wird von der Steuereinrichtung 9 in Schritt S4 ein anderer Betriebsmodus (zweiter Betriebsmodus) durchgeführt, in welchem eine definierte Verstellkraft in das Verteilergestänge 3 eingeleitet wird, um das Verteilergestänge in die Solldrehlage zu verdrehen.

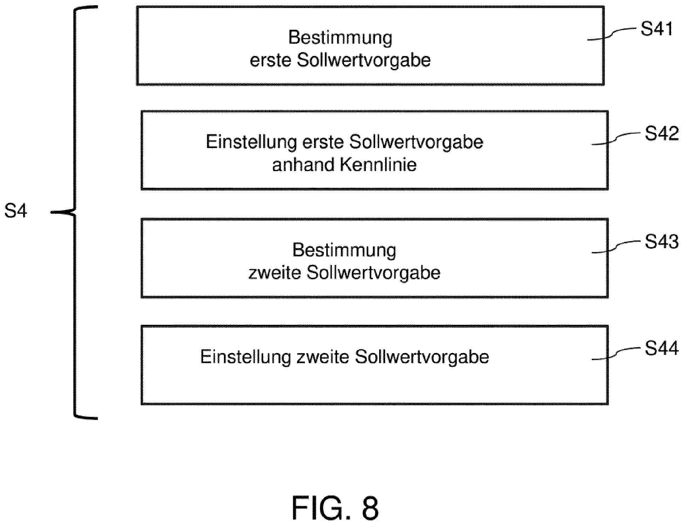

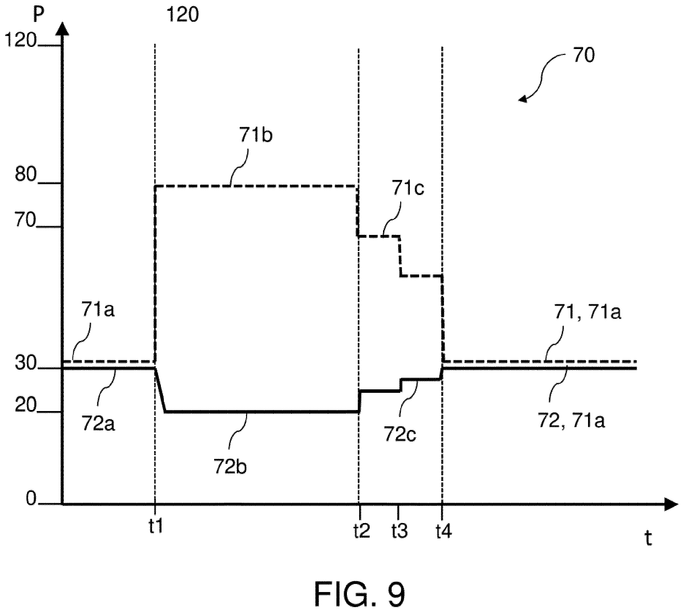

Eine Ausführungsform des zweiten Betriebsmodus ist in den Figuren 8 und 9 dargestellt. In Figur 9 zeigt die gestrichelte Linie 71 den zeitlichen Verlauf der Sollwertvorgabe des Wirkbereichs 14 und die durchgezogene Linie 72 den zeitlichen Verlauf der Sollwertvorgabe des Wirkbereichs 15. Bis zum Zeitpunkt t1 hat die Sollwertvorgabe an beiden Wirkbereichen den Wert 30 Bar (Abschnitte 71a und 72a) bei Annahme, dass die Drehlage in diesem Zeitintervall den Bereich S der Figur 6 nicht verlassen hat, so dass das Verteilergestänge in der aktuelle Drehlage gehalten wird.

Wird nun im Zeitpunkt t1 eine neue Solldrehlage vorgegeben, wird zunächst anhand der Abweichung der momentanen Drehlage von der Solldrehlage eine neue Sollwertvorgabe (Schritt S41, vgl. Figur 8) für jeden Wirkbereich 14, 15 eines an den Wirkbereichen 14, 15 wirkenden Drucks des Druckmittels bestimmt. Anhand der Abweichung der momentanen Drehlage von der neuen Solldrehlage und der bekannten Massenträgheit des Verteilergestänges 3 bestimmt die Steuereinrichtung 9, welches Drehmoment in das Verteilergestänge über die Stelleinrichtung 8 eingeleitet werden muss, um die Zielposition, d. h. die Solldrehlage, zu erreichen. Anders ausgedrückt, ist die Steuereinrichtung 9 ausgebildet, eine neue Sollwertvorgabe zu bestimmen, d. h. welche Verstellkraft (Zylinderkraft) benötigt wird bzw. welcher Druck an den Stellzylindern 12, 13 benötigt wird. Diese Sollwertvorgabe, d. h. dieser Druck, wird nun anhand der Kennlinie K am Druckregelventil erzeugt (Schritt S42). Diese Sollwertvorgabe ist in Figur 8 als erste Sollwertvorgabe bezeichnet. Die Kennlinie K gibt für den bestimmten Wert der Sollwertvorgabe die Bestromung der Druckregelventile 20, 21 vor.

Wiederum lediglich beispielhaft kann die Abweichung der momentanen Drehlage von der Solldrehlage ergeben, dass ausgehend von 30 Bar an beiden Wirkbereichen 14, 15 nun am Wirkbereich 14 ein Druck von 80 Bar und am Wirkbereich 15 ein Druck von 20 Bar erforderlich ist, um eine entsprechende Verstellkraft zu erzeugen, die das Verteilergestänge in die Sollposition verdreht. Aus der Kennlinie K ergeben sich dann für die neuen Sollwertvorgaben von 20 Bar und 80 Bar die entsprechenden Bestromungswerte für die Druckregelventile 20, 21. Entsprechend werden die Druckregelventile 20, 21 von der Steuerungseinrichtung 9 elektrisch angesteuert, so dass diese über ihre Druckregelung eigenständig die neuen Sollwertvorgaben an den Wirkbereichen 14, 15 einstellen.

Eine Besonderheit der vorliegenden Ausführungsform liegt jedoch darin, dass diese Druckdifferenz 80 Bar - 20 Bar = 60 Bar jedoch nicht so lange konstant gehalten bis beispielsweise die Sollposition erreicht ist und dann wieder auf beispielsweise 30 Bar zu 30 Bar geregelt wird, was alternativ ebenfalls möglich wäre. Stattdessen wird sich diesen Werten (30 Bar), die zum Halten des Verteilergestänges 3 in der Sollposition erforderlich sind, schrittweise angenähert, in dem weitere (zweite) Sollwertvorgaben in Schritt S43 bestimmt und anhand der Kennlinie 6 eingestellt werden (Schritt S44).

Dies ist in Figur 9 durch den stufenartigen Verlauf der Sollwertvorgaben 71, 72 im Bereich zwischen t2 und t4 illustriert. Kurz vor Erreichung der Solldrehlage reduziert die Steuereinrichtung 9 die Sollwertvorgabe schrittweise stufenartig. Vorliegend wird im Zeitpunkt t2 die Sollwertvorgabe 71 des Wirkbereichs 14 auf 70 Bar reduziert und die Sollwertvorgabe 72 des Wirkbereichs 15 auf 25 Bar erhöht. Im Zeitpunkt t3 wird die Sollwertvorgabe 71 des Wirkbereichs 14 weiter auf 60 Bar reduziert und die Sollwertvorgabe 72 des Wirkbereichs 15 weiter auf 28 Bar erhöht. Im Zeitpunkt t4 mit Erreichen der Solldrehlage wird dann an beiden Wirkbereichen 14, 15 wieder eine Sollwertvorgabe (dritte Sollwertvorgabe) von 30 Bar vorgegeben, um das Verteilergestänge in der erreichten Solldrehlage zu halten.

Wie diese Differenzen der Sollwertvorgaben bzw. der stufenartige Verlauf definiert werden, kann auch abhängig von der jeweiligen Drehlage sein. Beispielsweise kann optional die Anzahl der zweiten Sollwertvorgaben und/oder deren Abweichung von der ersten und dritten Sollwertvorgabe, in Abhängigkeit von der Abweichung der bestimmten Drehlage von der Solldrehlage des Verteilergestänges 3 festgelegt werden.

Die in Figur 9 gezeigte Annäherung der dritten Sollwertvorgabe mittels der zweiten Sollwertvorgabe, um den stufenartigen Verlauf zu realisieren, bietet den besonderen Vorzug, dass das Verteilergestänge vor Erreichen der Solldrehlage aktiv abgebremst bzw. gedämpft wird, so dass ein schnelles Einstellen der Solldrehlage, möglichst ohne oder mit wenig Überschwingen ermöglicht wird.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Landwirtschaftliche Verteilmaschine, z. B. gezogene Feldspritze
- 2: Trägerfahrzeug
- 3: Verteilergestänge
- 3a: Mittelteil
- 3b, 3c: Ausleger
- 3e: Befestigungsabschnitt am Mittelteil
- 5: Drehratensensor
- 6: Drehlagensensor
- 7: Regelkreis
- 8: Druckmittelbetätigte Stelleinrichtung
- 9: Steuereinrichtung
- 10: Stellorgan
- 11: Träger
- 11a: Aufhängung
- 12: Stellzylinder, z. B. einfachwirkender Plungerzylinder
- 12a: Befestigungsstelle
- 13: Stellzylinder, z. B. einfachwirkender Plungerzylinder
- 13a: Befestigungsstelle
- 14: Erster Wirkbereich
- 15: Zweiter Wirkbereich
- 16: Druckmittelkreislauf
- 17: Druckmittelleitungsstrecke
- 18: Druckmittelleitungsstrecke
- 19: Ausbringmittel, z. B. Sprühdüsen
- 20: Druckregelventil
- 21: Druckregelventil
- 22: Regelleitung
- 23: Trägerabschnitt
- 24: Höhenverstellbares Parallelogrammgestänge
- 25: Hubzylinder
- 26: Ultraschallsensoren
- 70: Sollwertvorgabe
- 71,71a-c: Sollwertvorgabe für ersten Wirkbereich
- 72, 72a-c: Sollwertvorgabe für zweiten Wirkbereich
- A: Schwenkachse
- K: Kennlinie
- R: Regeleingriff
- S: Bereich ohne Regeleingriff der Steuereinrichtung
- ω: Drehrate des Verteilergestänges
- ω₀: Schwellenwert für Drehrate im ersten Betriebsmodus

## Patentansprüche

1. Landwirtschaftliche Verteilmaschine (1), vorzugsweise eine Feldspritze oder ein pneumatischer Düngerstreuer, umfassend
ein Trägerfahrzeug (2);
ein Verteilergestänge (3) zum Ausbringen von Material, wie Düngemittel, Pflanzenschutzmittel oder Saatgut, das zumindest um eine in Fahrtrichtung verlaufende Schwenkachse (A) bewegbar am Trägerfahrzeug (2) mittelbar oder unmittelbar angeordnet ist;
eine Stelleinrichtung (8), mittels der eine Stellkraft erzeugbar ist, um das Verteilergestänge (3) um die Schwenkachse (A) zu bewegen;
eine erste Sensoreinrichtung (5) zur Erfassung einer Drehrate (ω) des Verteilergestänges; und
eine Steuereinrichtung (9) zur Steuerung und/oder Regelung einer Drehlage des Verteilergestänges (3) um die Schwenkachse (A), wobei die Steuereinrichtung (9) ausgebildet ist, einen ersten Betriebsmodus (S3) durchzuführen, um das Verteilergestänge (3) in einer aktuell eingestellten Solldrehlage zu halten, in dem auf das Verteilergestänge wirkende Störmomente, die aus Bewegungen des Trägerfahrzeugs um die Längsachse resultieren, zur Haltung der Solldrehlage ausgeregelt werden,
**dadurch gekennzeichnet,**
**dass** die Steuereinrichtung (9) ausgebildet ist, im ersten Betriebsmodus (S3) durch Bestimmung entsprechender Stellsignale zur Ansteuerung der Stelleinrichtung die von der ersten Sensoreinrichtung (5) erfasste Drehrate (ω) als Regelgröße auf einen Sollwert zu regeln, der betragsmäßig zwischen Null und einem Schwellenwert (ω₀) liegt.

2. Landwirtschaftliche Verteilmaschine (1) nach Anspruch 1, wobei die Steuereinrichtung (9) zur Durchführung des ersten Betriebsmodus ausschließlich die von der ersten Sensoreinrichtung (5) erfasste Drehrate (ω) als Regelgröße verwendet.

3. Landwirtschaftliche Verteilmaschine (1) nach Anspruch 1 oder 2, wobei die erste Sensoreinrichtung (5) als Drehratensensor, vorzugsweise als Gyroskop, ausgeführt ist, der eine Drehgeschwindigkeit (ω) des Verteilergestänges (3) erfasst.

4. Landwirtschaftliche Verteilmaschine (1) nach einem der vorhergehenden Ansprüche, wobei der Schwellenwert (ω0) auf einen Wert festgelegt ist, der kleiner als 0,1 rad/s, weiter vorzugsweis kleiner 0,05 rad/s oder kleiner als 0,025 rad/s ist.

5. Landwirtschaftliche Verteilmaschine (1) nach einem der vorhergehenden Ansprüche, wobei die erste Sensoreinrichtung (5) an einem Mittelteil (3a) des Verteilergestänges (3) angeordnet ist.

6. Landwirtschaftliche Verteilmaschine (1) nach einem der vorhergehenden Ansprüche, umfassend eine zweite Sensoreinrichtung (6) zur Erfassung einer Drehlage des Verteilergestänges (3), wobei die zweite Sensoreinrichtung (6) ausgebildet ist,
a) eine Relativdrehung zwischen Trägerfahrzeug und Verteilergestänge zu erfassen und vorzugsweise einen zwischen Trägerfahrzeug und Verteilergestänge angeordneten Drehwinkelsensors oder eine Verstellwegmesseinrichtung der Stelleinrichtung, die ausgebildet ist, einen Verstellweg der Stelleinrichtung zu erfassen, umfasst, oder
b) eine Drehlage des Verteilergestänges zur Erdbeschleunigungsrichtung oder zur Horizontalen zu bestimmen und vorzugsweise einen am Verteilergestänge angeordneten Drehwinkelsensor oder eine am Verteilergestänge angeordnete Abstandssensorik, beispielsweise eine Ultraschallsensorik, die ausgebildet ist, einen Abstand des Verteilergestänges zum Boden und/oder Pflanzenbestand zu erfassen, umfasst.

7. Landwirtschaftliche Verteilmaschine (1) nach einem der vorhergehenden Ansprüche,
a) wobei die Stelleinrichtung als eine druckmittelbetätigte Stelleinrichtung (8) mit zwei im Wesentlichen entgegengesetzt wirkenden Wirkbereichen (14, 15)ausgeführt ist, mittels der eine Stellkraft erzeugbar ist, um das Verteilergestänge um die Schwenkachse (A) zu bewegen, wobei jedem Wirkbereich (14, 15) ein Druckmittelregelventil (20, 21) zugeordnet ist zur Steuerung eines an dem jeweiligen Wirkbereich (14, 15) anliegenden Drucks oder Volumenstroms, und
b) wobei die Steuereinrichtung (9) ausgebildet ist, in Abhängigkeit von der erfassten Drehrate als Regelgröße eine Sollwertvorgabe eines an den Wirkbereichen (14, 15) wirkenden Drucks oder einer an den Wirkbereichen wirkenden Stellkraft des Druckmittels als Stellsignal zu bestimmen und die Druckmittelregelventile (20, 21) jeweils elektrisch gesteuert auf die Sollwertvorgabe einzustellen.

8. Landwirtschaftliche Verteilmaschine (1) nach Anspruch 7, wobei die Steuereinrichtung (9) ausgebildet ist, die Druckmittelregelventile (20, 21) jeweils anhand einer vorbestimmten Kennlinie (K) der Druckmittelregelventile (20, 21) elektrisch gesteuert auf die Sollwertvorgabe einzustellen, wobei die Kennlinie (K) der Druckmittelregelventile (20, 21) einen Zusammenhang zwischen Sollwertvorgabe und elektrischem Ansteuerungssignal der Druckmittelregelventile (20, 21) festlegt.

9. Landwirtschaftliche Verteilmaschine (1) nach Anspruch 8, wobei die Steuerungseinrichtung (9) ausgebildet ist,
a) die Sollwertvorgabe ohne einen sensorisch erfassten Druckwert oder Volumenstromwert des Druckmittels zu bestimmen; und/oder
b) einen Steuerstrom zur Ansteuerung der Druckmittelregelventile (20, 21) ausschließlich anhand der Kennlinie (k) und der Drehrate der ersten Sensoreinrichtung (5) oder einer hieraus berechneten Größe zu bestimmen.

10. Landwirtschaftliche Verteilmaschine (1) nach einem der Ansprüche 7 bis 9, wobei die Stelleinrichtung (8) ausgebildet ist, bei einer Ansteuerung mit konstantem Stellsignal durch die Stelleinrichtung Druckschwankungen in Druckmittelkreis selbsttätig mittels der Druckregelventile auszuregeln; und/oder wobei die Steuereinrichtung (9) ausgebildet ist, falls die bestimmte Drehrate (ω) kleiner als der Schwellenwert (ω₀) ist, ein der Sollwertvorgabe zugeordnetes elektrisches Ansteuerungssignal der Druckmittelregelventile (20, 21) konstant zu halten.

11. Landwirtschaftliche Verteilmaschine (1) nach einem der Ansprüche 7 bis 10, wobei die Stelleinrichtung (8) zur Ausbildung der zwei im Wesentlichen entgegengesetzt wirkenden Wirkbereiche (14, 15) einen doppeltwirkenden fluidischen Druckmittelzylinder oder zwei gegensinnig arbeitende einfachwirkende fluidische Druckmittelzylinder, vorzugsweise zwei Plungerzylinder (12, 13), umfasst.

12. Landwirtschaftliche Verteilmaschine (1) nach einem der Ansprüche 7 bis 11, wobei die Stelleinrichtung (8) ausgebildet ist, das Verteilergestänge (3) wahlweise in beide Drehrichtungen um die in Fahrtrichtung verlaufende Schwenkachse (A) mit einer Winkelgeschwindigkeit von mindestens 0,1 rad/s, weiter vorzugsweise mindestens 0,2 rad/s zu bewegen.

13. Landwirtschaftliche Verteilmaschine (1) nach einem der vorhergehenden Ansprüche, wobei die landwirtschaftliche Verteilmaschine (3) eine Feldspritze ist und das Verteilergestänge (3) eine Spritzgestänge ist, an dem mehrere Spritzdüsen (19) angeordnet sind.

14. Landwirtschaftliche Verteilmaschine nach einem der Ansprüche 1 bis 12, wobei die landwirtschaftliche Verteilmaschine ein pneumatischer Düngerstreuer ist, wobei das Verteilergestänge mehrere Verteilelemente zum Ausbringen von körnigem Dünger aufweist, wobei die Verteilelement vorzugsweise jeweils einen Prallteller aufweisen.

## Claims

1. An agricultural distribution machine (1), preferably a field sprayer or a pneumatic fertilizer spreader, comprising
a carrier vehicle (2);
a distributor boom (3) for spreading material, such as fertilizer, plant protection agent or seed, which is indirectly or directly arranged on the carrier vehicle (2) so as to be movable at least about a pivot axis (A) running in the direction of travel;
a controlling apparatus (8), a controlling force being able to be generated thereby in order to move the distributor boom (3) about the pivot axis (A);
a first sensor apparatus (5) for detecting an angular rate (ω) of the distributor boom; and
a control apparatus (9) for controlling and/or regulating a rotational position of the distributor boom (3) about the pivot axis (A), wherein the control apparatus (9) is configured to implement a first operating mode (S3) in order to hold the distributor boom (3) in a currently set target rotational position in which disturbance torques acting on the distributor boom, which result from movements of the carrier vehicle about the longitudinal axis, are compensated in order to hold the target rotational position,
**characterized in that**
in the first operating mode (S3) by determining corresponding controlling signals for activating the controlling apparatus, the control apparatus (9) is configured to regulate the angular rate (ω) detected by the first sensor apparatus (5) as a controlled variable to a target value which has an absolute value of between zero and a threshold value (ω₀).

2. The agricultural distribution machine (1) according to Claim 1, wherein for implementing the first operating mode the control apparatus (9) exclusively uses the angular rate (ω) detected by the first sensor apparatus (5) as the controlled variable.

3. The agricultural distribution machine (1) according to Claim 1 or 2, wherein the first sensor apparatus (5) is designed as an angular rate sensor, preferably as a gyroscope, which detects a rotational speed (ω) of the distributor boom (3).

4. The agricultural distribution machine (1) according to one of the preceding claims, wherein the threshold value (ω₀) is fixed to a value which is lower than 0.1 rad/s, further preferably lower than 0.05 rad/s or lower than 0.025 rad/s.

5. The agricultural distribution machine (1) according to one of the preceding claims, wherein the first sensor apparatus (5) is arranged on a central part (3a) of the distributor boom (3).

6. The agricultural distribution machine (1) according to one of the preceding claims, comprising a second sensor apparatus (6) for detecting a rotational position of the distributor boom (3), wherein the second sensor apparatus (6) is configured
a) to detect a relative rotation between the carrier vehicle and the distributor boom and preferably comprises a rotation angle sensor or a displacement path measuring apparatus of the controlling apparatus arranged between the carrier vehicle and the distributor boom, which is configured to detect a displacement path of the controlling apparatus, or
b) to determine a rotational position of the distributor boom relative to the direction of gravitational acceleration or to the horizontal, and preferably comprises a rotation angle sensor arranged on the distributor boom or a distance sensor unit arranged on the distributor boom, for example an ultrasonic sensor unit, which is configured to detect a distance of the distributor boom from the ground and/or plant population.

7. The agricultural distribution machine (1) according to one of the preceding claims,
a) wherein the controlling apparatus (8) is configured as a pressure medium-actuated controlling apparatus with two substantially opposingly acting effective regions (14, 15), a controlling force being able to be generated thereby in order to move the distributor boom about the pivot axis (A), wherein a pressure medium control valve (20, 21) is assigned to each effective region (14, 15) for controlling a pressure or volumetric flow prevailing on the respective effective region (14, 15), and
b) wherein the control apparatus (9) is configured to determine as a function of the detected angular rate, as a controlled variable, a predetermined target value of a pressure acting on the effective regions (14, 15) or a controlling force of the pressure medium acting on the effective regions as a controlling signal, and to set the pressure medium control valves (20, 21), in each case by being electrically controlled, to the predetermined target value.

8. The agricultural distribution machine (1) according to Claim 7, wherein the control apparatus (9) is configured to set the pressure medium control valves (20, 21) to the predetermined target value, in each case being electrically controlled using a predetermined characteristic curve (K) of the pressure medium control valves, wherein the characteristic curve (K) of the pressure medium control valves (20, 21) establishes a connection between the predetermined target value and the electrical activation signal of the pressure medium control valves (20, 21).

9. The agricultural distribution machine (1) according to Claim 8, wherein the control apparatus (9) is configured
a) to determine the predetermined target value without a pressure value or volumetric flow value of the pressure medium detected by sensor; and/or
b) to determine a control current for activating the pressure medium control valves (20, 21) exclusively using the characteristic curve (k) and the angular rate of the first sensor apparatus (5) or a variable calculated therefrom.

10. The agricultural distribution machine (1) according to one of Claims 7 to 9, wherein the controlling apparatus (8) is configured, when activated by a constant controlling signal by the controlling apparatus, to compensate automatically for pressure fluctuations in the pressure medium circuit by means of the pressure control valves; and/or wherein the control apparatus (9) is configured, if the determined angular rate (ω) is lower than the threshold value (ω₀), to hold constant an electrical activation signal of the pressure medium control valves (20, 21) assigned to the predetermined target value.

11. The agricultural distribution machine (1) according to one of Claims 7 to 10, wherein the controlling apparatus (8) comprises a dual-acting fluidic pressure medium cylinder or two single-acting pressure medium cylinders which operate opposingly, preferably two plunger cylinders (12, 13), for forming the two substantially opposingly acting effective regions (14, 15);

12. The agricultural distribution machine (1) according to one of Claims 7 to 11, wherein the controlling apparatus (8) is configured to move the distributor boom (3) optionally in both rotational directions about the pivot axis (A) running in the direction of travel at an angular velocity of at least 0.1 rad/s, further preferably of at least 0.2 rad/s.

13. The agricultural distribution machine (1) according to one of the preceding claims, wherein the agricultural distribution machine (3) is a field sprayer and the distributor boom (3) is a spraying boom on which a plurality of spray nozzles (19) are arranged.

14. The agricultural distribution machine according to one of Claims 1 to 12, wherein the agricultural distribution machine is a pneumatic fertilizer spreader, wherein the distributor boom comprises a plurality of distribution elements for spreading granular fertilizer, wherein the distribution elements preferably in each case comprise a deflector plate.

## Revendications

1. Machine d'épandage agricole (1), de préférence un pulvérisateur agricole ou un distributeur d'engrais pneumatique, comprenant
un véhicule porteur (2) ;
une rampe de distribution (3) destinée à épandre du matériel, tel que de l'engrais, un produit phytosanitaire ou des semences, laquelle est disposée directement ou indirectement sur le véhicule porteur (2) de manière à pouvoir être déplacée autour d'un axe de pivotement (A) qui suit un tracé dans la direction de déplacement ;
un dispositif de réglage (8), au moyen duquel peut être générée une force de réglage afin de déplacer la rampe de distribution (3) autour de l'axe de pivotement (A) ; un premier dispositif de détection (5) destiné à détecter une vitesse de rotation (ω) de la rampe de distribution ; et
un dispositif de commande (9) destiné à commander et/ou à réguler une position de rotation de la rampe de distribution (3) autour de l'axe de pivotement (A), le dispositif de commande (9) étant configuré pour mettre en œuvre un premier mode de fonctionnement (S3) en vue de maintenir la rampe de distribution (3) dans une position de rotation de consigne actuellement réglée en régulant les moments parasites agissant sur la rampe de distribution, lesquels résultent des mouvements du véhicule porteur autour de l'axe longitudinal, en vue de maintenir la position de rotation de consigne,
**caractérisée en ce**
**que** le dispositif de commande (9) est configuré pour, dans le premier mode de fonctionnement (S3), en déterminant des signaux de réglage spécifiques destinés à commander le dispositif de réglage, réguler la vitesse de rotation (ω) détectée par le premier dispositif de détection (5) en tant que grandeur de régulation à une valeur de consigne dont le montant est compris entre zéro et une valeur de seuil (ω₀).

2. Machine d'épandage agricole (1) selon la revendication 1, le dispositif de commande (9) utilisant exclusivement la vitesse de rotation (ω) détectée par le premier dispositif de détection (5) en tant que grandeur de régulation pour mettre en œuvre le premier mode de fonctionnement.

3. Machine d'épandage agricole (1) selon la revendication 1 ou 2, le premier dispositif de détection (5) étant réalisé sous la forme d'un capteur de vitesse de rotation, de préférence sous la forme d'un gyroscope, qui détecte une vitesse de rotation (ω) de la rampe de distribution (3).

4. Machine d'épandage agricole (1) selon l'une des revendications précédentes, la valeur de seuil (ω₀) étant fixée à une valeur qui est inférieure à 0,1 rad/s, en outre de préférence inférieure à 0,05 radis ou inférieure à 0,025 rad/s.

5. Machine d'épandage agricole (1) selon l'une des revendications précédentes, le premier dispositif de détection (5) étant disposé au niveau d'une partie centrale (3a) de la rampe de distribution (3).

6. Machine d'épandage agricole (1) selon l'une des revendications précédentes, comprenant un deuxième dispositif de détection (6) destiné à détecter une position de rotation de la rampe de distribution (3), le deuxième dispositif de détection (6) étant configuré pour
a) détecter une rotation relative entre le véhicule porteur et la rampe de distribution et comporte de préférence un capteur d'angle de rotation disposé entre le véhicule porteur et la rampe de distribution ou un dispositif de mesure de course de réglage du dispositif de réglage, lequel est configuré pour détecter une course de réglage du dispositif de réglage, ou
b) déterminer une position de rotation de la rampe de distribution par rapport à la direction de l'accélération gravitationnelle ou par rapport à l'horizontale et comporte de préférence un capteur d'angle de rotation disposé sur la rampe de distribution ou un système de détection d'écart disposé sur la rampe de distribution, par exemple un système de détection à ultrasons, lequel est configuré pour détecter un écart entre la rampe de distribution et le sol et/ou une population végétale.

7. Machine d'épandage agricole (1) selon l'une des revendications précédentes,
a) le dispositif de réglage étant réalisé sous la forme d'un dispositif de réglage (8) actionné par fluide sous pression, comprenant deux zones d'action (14, 15) agissant sensiblement en sens inverse, au moyen duquel peut être générée une force de réglage en vue de déplacer la rampe de distribution autour de l'axe de pivotement (A), une vanne de régulation de fluide sous pression (20, 21) étant associée à chaque zone d'action (14, 15) pour commander une pression ou un débit volumique appliqué à la zone d'action (14, 15) respective, et
b) le dispositif de réglage étant configuré pour, en fonction de la vitesse de rotation détectée en tant que grandeur de régulation, déterminer une valeur de consigne prédéfinie d'une pression agissant au niveau des zones d'action (14, 15) ou d'une force de réglage du fluide sous pression agissant au niveau des zones d'action en tant que signal de réglage et régler les vannes de régulation de fluide sous pression (20, 21) à la valeur de consigne prédéfinie respectivement par commande électrique.

8. Machine d'épandage agricole (1) selon la revendication 7, le dispositif de commande (9) étant configuré pour régler les vannes de régulation de fluide sous pression (20, 21) à la valeur de consigne prédéfinie par commande électrique, respectivement à l'aide d'une courbe caractéristique (K) prédéterminée des vannes de régulation de fluide sous pression (20, 21), la courbe caractéristique (K) des vannes de régulation de fluide sous pression (20, 21) spécifiant une relation entre la valeur de consigne prédéfinie et le signal de commande électrique des vannes de régulation de fluide sous pression (20, 21).

9. Machine d'épandage agricole (1) selon la revendication 8, le dispositif de commande (9) étant configuré pour
a) déterminer la valeur de consigne prédéfinie sans une valeur de pression ou une valeur de débit volumique du fluide sous pression détectées par capteur ; et/ou
b) déterminer un courant de commande destiné à commander les vannes de régulation de fluide sous pression (20, 21) exclusivement à l'aide de la courbe caractéristique (K) et de la vitesse de rotation du premier dispositif de détection (5) ou une grandeur calculée à partir de celle-ci.

10. Machine d'épandage agricole (1) selon l'une des revendications 7 à 9, le dispositif de réglage (8) étant configuré pour, lors d'une commande avec un signal de réglage constant par le dispositif de réglage, réguler les fluctuations de pression dans le circuit à fluide sous pression automatiquement au moyen des vannes de régulation de pression ; et/ou le dispositif de commande (9) étant configuré pour, dans le cas où la vitesse de rotation (ω) déterminée est inférieure à la valeur de seuil (ω₀), maintenir constant un signal de commande électrique des vannes de régulation de fluide sous pression (20, 21) associé à la valeur de consigne prédéfinie.

11. Machine d'épandage agricole (1) selon l'une des revendications 7 à 10, le dispositif de réglage (8), en vue de former les deux zones d'action (14, 15) agissant sensiblement en sens inverse, comprenant un vérin à fluide sous pression fluidique à double action ou deux vérins à fluide sous pression fluidiques à simple action fonctionnant en sens inverse, de préférence deux vérins à plongeur (12, 13).

12. Machine d'épandage agricole (1) selon l'une des revendications 7 à 11, le dispositif de réglage (8) étant configuré pour déplacer la rampe de distribution (3) au choix dans les deux directions de rotation autour de l'axe de pivotement (A) qui suit un tracé dans la direction de déplacement avec une vitesse angulaire d'au moins 0,1 rad/s, en outre de préférence d'au moins 0,2 rad/s.

13. Machine d'épandage agricole (1) selon l'une des revendications précédentes, la machine d'épandage agricole (3) étant un pulvérisateur agricole et la rampe de distribution (3) étant une rampe de pulvérisation sur laquelle sont disposées plusieurs buses de pulvérisation (19) .

14. Machine d'épandage agricole selon l'une des revendications 1 à 12, la machine d'épandage agricole étant un distributeur d'engrais pneumatique, la rampe de distribution possédant plusieurs éléments de distribution destinés à l'épandage d'engrais granuleux, les éléments de distribution possédant de préférence respectivement une plaque de rebondissement.
